# EUROPÄISCHE PATENTSCHRIFT

(11) **EP 3 746 510 B1**
(45) Veröffentlichungstag und Bekanntmachung des Hinweises auf die Patenterteilung: **31.01.2024**
(21) Anmeldenummer: 19701540.7
(22) Anmeldetag: 31.01.2019
(51) Int. Cl.: C08L 77/02, C08L 77/06

(54) **VERWENDUNG VON MEHRWERTIGEN ALKOHOLEN ZUR ERHÖHUNG DER BINDENAHTFESTIGKEIT NACH WÄRMEALTERUNG IN POLYAMIDEN**
USE OF POLYVALENT ALCOHOLS FOR INCREASING WELD LINE STRENGTH AFTER HEAT AGEING IN POLYAMIDES
UTILISATION D'ALCOOLS POLYVALENTS PERMETTANT D'AUGMENTER LA RÉSISTANCE DE LIGNE DE LIAISON LORS DU VIEILLISSEMENT THERMIQUE DANS DES POLYAMIDES

(30) Priorität: 02.02.2018 EP 18154889
(43) Veröffentlichungstag der Anmeldung: 09.12.2020
(73) Patentinhaber: BASF SE, 67056 Ludwigshafen am Rhein (DE)
(72) Erfinder: WAGNER, Sebastian, 67056 Ludwigshafen (DE); ROTH, Michael, 67056 Ludwigshafen (DE); MOCHEV, Stefan, 67056 Ludwigshafen (DE)
(74) Vertreter: BASF IP Association
(86) Internationale Anmeldenummer: PCT/EP2019/052313
(87) Internationale Veröffentlichungsnummer: WO 2019/149791

(56) Entgegenhaltungen:
- EP-A2- 1 041 109
- US-A- 4 885 340
- US-A1- 2013 253 115

## Beschreibung

Die Erfindung betrifft die Verwendung von mehrwertigen Alkoholen mit mehr als zwei Hydroxylgruppen und ein entsprechendes Verfahren.

Polyamide gehören zu den weltweit in großem Umfang hergestellten Polymeren und dienen neben den Hauptanwendungsbereichen Folien, Fasern und Formkörpern (Werkstoffen) einer Vielzahl weiterer Verwendungszwecke. Unter den Polyamiden sind das Polyamid 6 (Polycaprolactam, PA 6) und das Polyamid 66 (Nylon, Polyhexamethylenadipinsäureamid, PA 66) die am meisten hergestellten Polymere. Die meisten technisch bedeutsamen Polyamide sind teilkristalline thermoplastische Polymere, die sich durch eine hohe Temperaturbeständigkeit auszeichnen.

Formkörper aus Polyamiden können beispielsweise durch Spritzgießen hergestellt werden. Dabei entstehen in der Regel (dynamische) Bindenähte. Grundsätzlich unterscheidet man zwischen statischen und dynamischen Bindenähten. Statische Bindenähte entstehen z. B. während des Schweißprozesses beim Fügen von thermoplastischen Formteilen. Eine dynamische Bindenaht entsteht in einem Kunststoffbauteil im Spritzgießprozess durch den Zusammenfluss von mindestens zwei Masseströmen z. B. hinter Hohlräumen, durch Wanddickenunterschiede oder durch mehrere Anschnitte oder Einspritzpunkte des Werkzeugs. Wenn zwei Fließfronten aufeinandertreffen, entsteht an der Stelle des Zusammenflusses eine Bindenaht, auch Schweißlinie oder Fließlinie genannt. Optisch treten diese Nähte als Linien hervor. Eine Bindenaht ist damit ein häufig sichtbarer Oberflächeneffekt an Spritzgießteilen.

Eine Bindenaht ist eine potentielle Schwachstelle im Bauteil. Die Fließfronten treffen hierbei aufgrund einer Volumendehnung senkrecht aufeinander und verschweißen. Je geringer der Druck und die Temperatur sind, umso geringer ist die Festigkeit der Bindenaht. Verstärkungsfasern orientieren sich aufgrund der während des Spritzgießprozesses wirkenden Scherung und der Strömungsverhältnisse oft parallel zur Bindenaht. Ist die Schmelze bereits so stark abgekühlt, dass ein Verschweißen der aufeinandertreffenden Schmelzefronten nicht mehr vollständig erfolgen kann, ist die Bindenaht an der Oberfläche oft als V-förmige Kerbe zu erkennen. Sollten in diesem Bereich Zugspannungen auftreten, kommt es infolge der Kerbwirkung zu einer Spannungsüberhöhung an der Bindenaht, die dann als Sollbruchstelle fungiert.

Aus WO 2010/014801 ist es bekannt, wärmebeständige Polyamidformkörper herzustellen, bei denen dem Polyamid mehrwertige Alkohole, wie Pentaerythrit, Dipentaerythrit, Tripentaerythrit, Di-Trimethylolpropan, D-Mannit, D-Sorbit oder Xylit, beigemischt werden. Auch Polyamidmischungen können eingesetzt werden. Gemäß den Ausführungsbeispielen enthalten die Polyamidmischungen einen größeren Anteil eines zumindest teilaromatischen Polyamids und einen geringeren Anteil eines aliphatischen Polyamids. In WO 201194553 werden entsprechende Polyhydroxypolymere für vergleichbare Anwendungen beschrieben.

EP-B-2 307 480 betrifft wärmebeständige thermoplastische Artikel mit Co-Stabilisatoren. Die Artikel werden aus Polyamid-Zusammensetzungen hergestellt, die mindestens einen mehrwertigen Alkohol mit mehr als zwei Hydroxylgruppen und einem zahlenmittleren Molekulargewicht (Mₙ) von weniger als 2.000 sowie Co-Stabilisatoren enthalten, die ausgewählt sind aus sekundären Arylaminen und gehinderten Amin-Lichtstabilisatoren (HALS) sowie Gemischen davon. Zudem sind Verstärkungsmittel im Polyamidharz enthalten.

US 4 885 340 A betrifft Polyamidzusammensetzungen enthaltend mindestens ein Polyamid mit einer relativen Viskosität von mindestens 3,15 in 98%iger Schwefelsäure, mindestens ein Ethylen-lonomerharz und mindestens eine Monoepoxy- oder Carbonatverbindung. Zusätzlich kann die Zusammensetzung ein elastomeres Olefincopolymer, ein elastomeres Styrolcopolymer und/oder einen polyvalenten Alkohol enthalten. Die Polyamidzusammensetzung hat gemäß US 4 885 340 A eine exzellente mechanische Festigkeit und exzellente Wärmebeständigkeitseigenschaften und kann zur Herstellung von Fahrzeugteilen und Sportartikeln verwendet werden. Die Polyamidzusammensetzung hat des Weiteren gemäß US 4 885 340 A eine exzellente Schlagfestigkeit, insbesondere eine exzellente Bindenahtschlagfestigkeit.

Die aus den Polyamiden durch Spritzgießen hergestellten Formkörper sollen auch nach längerer Wärmealterung bei hohen Temperaturen gute mechanische Eigenschaften aufweisen.

Aufgabe der vorliegenden Erfindung ist die Bereitstellung von Polyamidzusammensetzungen, die zur Herstellung spritzgegossener Formkörper geeignet sind, welche eine erhöhte Bindenahtfestigkeit nach Wärmealterung zeigen.

Die Aufgabe wird erfindungsgemäß gelöst durch die Verwendung von mehrwertigen Alkoholen mit mehr als zwei Hydroxylgruppen in Polyamid-Zusammensetzungen, die mindestens ein Polyamid enthalten, zur Erhöhung der Bindenahtfestigkeit nach Wärmealterung von durch Spritzgießen aus der Polyamid-Zusammensetzung hergestellten Formkörpern, wobei beim Spritzgie-ßen mindestens zwei Fließfronten der geschmolzenen Polyamid-Zusammensetzung aufeinandertreffen und mindestens eine Bindenaht ausbilden, dadurch gekennzeichnet, dass eine Polyamid-Zusammensetzung eingesetzt wird, enthaltend
a) 30 bis 99,9 Gew.-% mindestens eines Polyamids als Komponente A),
b) 0 bis 60 Gew.-% Glasfasern als Komponente B),
c) 0 bis 2 Gew.-% Wärmestabilisatoren ausgewählt unter Kupferverbindungen, sekundären aromatischen Aminen, sterisch gehinderten Phenolen, Phosphiten, Phosphoniten und Mischungen davon als Komponente C),
d) 0,1 bis 10 Gew.-% mindestens eines mehrwertigen Alkohols mit mehr als zwei Hydroxylgruppen als Komponente D),
e) 0 bis 20 Gew.-% weitere Zusatzstoffe als Komponente E),

wobei sich die Mengenangaben, deren Summe 100 Gew.-% ergibt, auf die gesamte Zusammensetzung beziehen, und
die Polyamid-Zusammensetzung maximal 1,5 Gew.-% an Schlagzähigkeitsmodifikatoren enthält und die Polyamid-Zusammensetzung keine Ethylenionomerharze enthält.

Die Aufgabe wird zudem gelöst durch ein Verfahren zur Erhöhung der Bindenahtfestigkeit nach Wärmealterung von aus Polyamid-Zusammensetzungen durch Spritzgießen hergestellten Formkörpern, bei dem man der Polyamid-Zusammensetzung vor dem Herstellen der Formkörper 0,1 bis 10 Gew.-%, bezogen auf die gesamte Polyamid-Zusammensetzung, mindestens eines mehrwertigen Alkohols mit mehr als zwei Hydroxylgruppen und die so erhaltene Polyamid-Zusammensetzung zur Herstellung der Formkörper spritzgießt, wobei beim Spritzgießen mindestens zwei Fließfronten der geschmolzenen Polyamid-Zusammensetzung aufeinandertreffen und mindestens eine Bindenaht ausbilden, dadurch gekennzeichnet, dass eine Polyamid-Zusammensetzung eingesetzt wird, enthaltend
a) 30 bis 99,9 Gew.-% mindestens eines Polyamids als Komponente A),
b) 0 bis 60 Gew.-% Glasfasern als Komponente B),
c) 0 bis 2 Gew.-% Wärmestabilisatoren ausgewählt unter Kupferverbindungen, sekundären aromatischen Aminen, sterisch gehinderten Phenolen, Phosphiten, Phosphoniten und Mischungen davon als Komponente C),
d) 0,1 bis 10 Gew.-% mindestens eines mehrwertigen Alkohols mit mehr als zwei Hydroxylgruppen als Komponente D),
e) 0 bis 20 Gew.-% weitere Zusatzstoffe als Komponente E),

wobei sich die Mengenangaben, deren Summe 100 Gew.-% ergibt, auf die gesamte Zusammensetzung beziehen, und
die Polyamid-Zusammensetzung maximal 1,5 Gew.-% an Schlagzähigkeitsmodifikatoren enthält und die Polyamid-Zusammensetzung keine Ethylenionomerharze enthält.

Es wurde erfindungsgemäß gefunden, dass durch Verwendung von mehrwertigen Alkoholen mit mehr als zwei Hydroxylgruppen in Polyamid-Zusammensetzungen, die mindestens ein Polyamid enthalten, die Bindenahtfestigkeit nach Wärmealterung von durch Spritzgießen aus der Polyamid-Zusammensetzung hergestellten Formkörpern steigt. Die Bindenahtfestigkeit ist ein spezielles Kriterium bei durch Spritzgießen hergestellten Formkörpern, wobei beim Spritzgießen mindestens zwei Fließfronten der geschmolzenen Polyamid-Zusammensetzung aufeinandertreffen und mindestens eine Bindenaht ausbilden.

Unter dem Begriff "Bindenaht" wird erfindungsgemäß eine dynamische Bindenaht verstanden, wie sie eingangs beschrieben ist. Der Begriff "Bindenaht" kann auch durch "Fließlinie" oder "Schweißlinie" ersetzt sein. Wesentlich ist, dass die Bindenaht durch das Spritzgießen der Polyamid-Zusammensetzung erhalten wird. Die Bindenähte sind häufig die Schwachstellen des spritzgegossenen Formkörpers. Insbesondere bei einem zu schnellen Erkalten der PolyamidZusammensetzung an der Formwand des Spritzgusswerkzeugs kann sich der zusammenfließende Massestrom nicht mehr optimal verbinden. Es kommt zur Ausbildung von Bindenähten oder auch von kleinen Kerben, die dann eine Schwachstelle im Spritzgussteil darstellen. Bei einer mechanischen Belastung kommt es häufig zu einem Bruch entlang der Bindenaht/Fließnaht, oder ein Bruch beginnt in diesem Bereich. Daher ist die Bindenahtfestigkeit wichtig für die Festigkeit des spritzgegossenen Formkörpers insgesamt.

Oft verschlechtern sich die mechanischen Eigenschaften der spritzgegossenen Formkörper bei einer Wärmealterung, die über die Lebensdauer des Formkörpers hin stattfindet. Damit ist die Erhöhung der Bindenahtfestigkeit nach Wärmealterung für spritzgegossene Formkörper besonders wichtig.

Durch Einsatz von mehrwertigen Alkoholen in Polyamid-Zusammensetzungen verschlechtern sich typischerweise die mechanischen Eigenschaften, insbesondere bei Extrudieren und Spritzgießen zu Formkörpern. Dies ist zum einen auf einen chemischen Abbau des Basispolymers durch den Alkohol zurückzuführen (Reduktion der Viskositätszahl), zum anderen neigen kurzkettige Alkohole bei bestimmten Konzentrationen und Kombinationen zu Migration (siehe auch EP 1 797 132 B1).

Erfindungsgemäß wurde jedoch gefunden, dass sich die Bindenahtfestigkeit nach Wärmealterung durch Zusatz der mehrwertigen Alkohole erhöhen lässt. Zudem konnte durch Einsatz hochmolekularer Alkohole, wie z. B. Polyvinylalkoholcopolymere, die Oberflächengüte durch reduzierte Migration verbessert werden. Idealerweise haben diese Copolymere einen MFR (210 °C / 2,16 kg) zwischen 2 und 20 g / 10 Min.

Dabei kann zusätzlich die Mitverwendung von Wärmestabilisatoren, ausgewählt unter Kupferverbindungen, sekundären aromatischen Aminen, sterisch gehinderten Phenolen, Phosphiten, Phosphoniten und Mischungen davon, vorteilhaft sein. Die mehrwertigen Alkohole zeigen eine die Bindenahtfestigkeit erhöhende Wirkung, insbesondere bei einer Wärmealterung bei Temperaturen von mindestens 140 °C, beispielsweise bei 180 °C bis 220 °C. Die zusätzlichen Wärmestabilisatoren können die Bindenahtfestigkeit zusätzlich bei niedrigeren Temperaturen, beispielsweise im Bereich bis 150 °C, beispielsweise bei 140 °C, erhöhen. Damit kann durch Kombination der mehrwertigen Alkohole mit den genannten zusätzlichen Wärmestabilisatoren eine Erhöhung der Bindenahtfestigkeit nach Wärmealterung in einem breiten Temperaturbereich erreicht werden.

Zudem werden durch Kombination von Polyamiden mit Copolyamiden oder Terpolyamiden und mehrwertigen Alkoholen Polyamid-Zusammensetzungen erhalten, die gute Bindenahtfestigkeiten zeigen, die auch bei längerer Wärmealterung nicht zu stark nachlassen. Diese Effekte treten insbesondere bei einer Kombination von aliphatischem Polyamid mit aliphatischem Copolyamid oder Terpolyamid auf.

In der erfindungsgemäßen Verwendung bzw. dem erfindungsgemäßen Verfahren wird eine Polyamid-Zusammensetzung eingesetzt, enthaltend
a) 30 bis 99,9 Gew.-% mindestens eines Polyamids als Komponente A),
b) 0 bis 60 Gew.-% Glasfasern als Komponente B),
c) 0 bis 2 Gew.-% Wärmestabilisatoren ausgewählt unter Kupferverbindungen, sekundären aromatischen Aminen, sterisch gehinderten Phenolen, Phosphiten, Phosphoniten und Mischungen davon als Komponente C),
d) 0,1 bis 10 Gew.-% mindestens eines mehrwertigen Alkohols mit mehr als zwei Hydroxylgruppen als Komponente D),
e) 0 bis 20 Gew.-% weitere Zusatzstoffe als Komponente E),
wobei sich die Mengenangaben, deren Summe 100 Gew.-% ergibt, auf die gesamte Zusammensetzung beziehen.

Die Polyamid-Zusammensetzung enthält maximal 1,5 Gew.-% an Schlagzähigkeitsmodifikatoren, wie sie beispielsweise in US 2013/0253115 A1 beschrieben sind.

Zudem enthält die Polyamid-Zusammensetzung keine Ethylenionomerharze, wie sie beispielsweise in US 4,885,340 beschrieben sind.

Gemäß einer Ausführungsform der Erfindung enthält die Polyamid-Formmasse vorzugsweise keine Monoepoxy- oder Carbonat-Verbindungen, wie sie als Verbindungen (C) der allgemeinen Formel (I) in US 4,885,340 beschrieben sind.

Gemäß einer Ausführungsform der Erfindung ist der mehrwertige Alkohol kein Glyzerin.

Die erfindungsgemäß eingesetzten Polyamid-Zusammensetzungen enthalten 30 bis 99,9 Gew.-%, vorzugsweise 40 bis 99,5 Gew.-%, insbesondere 50 bis 98,5 Gew.-% der Komponente A).

Sie enthalten zudem 0 bis 60 Gew.-%, vorzugsweise 0 bis 40 Gew.-%, insbesondere 0 bis 30 Gew.-% der Komponente B). Sofern Komponente B) vorliegt, beträgt die Mindestmenge vorzugsweise 5 Gew.-%, besonders bevorzugt mindestens 10 Gew.-%, insbesondere mindestens 15 Gew.-%. In diesem Fall ergeben sich Bereiche von 5 bis 60 Gew.-%, vorzugsweise 10 bis 40 Gew.-%, besonders bevorzugt 15 bis 30 Gew.-% der Komponente B).

Komponente C) wird in einer Menge von 0 bis 2 Gew.-%, vorzugsweise 0 bis 1 Gew.-%, besonders bevorzugt 0 bis 0,5 Gew.-% eingesetzt. Sofern Komponente C) mitverwendet wird, beträgt die Untergrenze vorzugsweise 0,01 Gew.-%, besonders bevorzugt 0,02 Gew.-%, insbesondere 0,05 Gew.-%. In diesem Fall ergeben sich somit Mengenbereiche von 0,01 bis 2 Gew.-%, vorzugsweise 0,02 bis 1 Gew.-%, besonders bevorzugt 0,05 bis 0,5 Gew.-%.

Die Komponente D) wird in einer Menge von 0,1 bis 10 Gew.-%, vorzugsweise 0,5 bis 5 Gew.-%, insbesondere 1,5 bis 3 Gew.-% eingesetzt.

Komponente E) wird in einer Menge von 0 bis 20 Gew.-%, vorzugsweise 0 bis 10 Gew.-%, insbesondere 0 bis 5 Gew.-% eingesetzt. Sofern Komponente E) mitverwendet wird, beträgt die Untergrenze vorzugsweise 0,1 Gew.-%, besonders bevorzugt mindestens 0,2 Gew.-%, insbesondere mindestens 0,3 Gew.-%. In diesem Fall ergeben sich Bereiche von 0,1 bis 20 Gew.-%, vorzugsweise 0,2 bis 10 Gew.-%, besonders bevorzugt 0,3 bis 5 Gew.-%, insbesondere 0,3 bis 2 Gew.%.

Beim Vorliegen der Komponenten B), C) und/oder E) verringert sich die maximale Menge der Komponente A) entsprechend um die Mindestmengen der jeweiligen Komponenten bzw. die Summe dieser Mindestmengen. Beim Vorliegen der Komponente B) in einer Mindestmenge von 5 Gew.-% erniedrigt sich damit beispielsweise die Maximalmenge der Komponente A) auf 94,9 Gew.-%.

Liegen zusätzlich die Mindestmengen an Komponenten C) und E) von 0,01 bzw. 0,1 Gew.-% vor, verringert sich die Maximalmenge der Komponente A) entsprechend auf 94,7 Gew.-%. Bei den anderen Mengenbereichen wird entsprechend verfahren, so dass sich die Gesamtmenge der Komponenten A) bis E) immer auf 100 Gew.-% ergänzt.

Die erfindungsgemäß eingesetzte Polyamid-Zusammensetzung, enthält als Komponente A) wenigstens ein synthetisches Polyamid. Der Begriff "synthetisches Polyamid" wird im Rahmen der Erfindung breit verstanden. Die erfindungsgemäßen synthetischen Polyamide können auch copolymerisierbare Monomere einpolymerisiert enthalten. Der Begriff "synthetisches Polyamid" umfasst keine natürlichen Polyamide, wie Peptide und Proteine, z. B. Haare, Wolle, Seide und Eiweiß.

Zur Bezeichnung der Polyamide werden im Rahmen der Erfindung zum Teil fachübliche Kurzzeichen verwendet, die aus den Buchstaben PA sowie darauffolgenden Zahlen und Buchstaben bestehen. Einige dieser Kurzzeichen sind in der DIN EN ISO 1043-1 genormt. Polyamide, die sich von Aminocarbonsäuren des Typs H₂N-(CH₂)ₓ-COOH oder den entsprechenden Lactamen ableiten lassen, werden als PA Z gekennzeichnet, wobei Z die Anzahl der Kohlenstoffatome im Monomer bezeichnet. So steht z. B. PA 6 für das Polymere aus ε-Caprolactam bzw. der ω-Aminocapronsäure. Polyamide, die sich von Diaminen und Dicarbonsäuren der Typen H₂N-(CH₂)ₓ-NH₂ und HOOC-(CH₂)_{y}-COOH ableiten lassen, werden als PA Z1Z2 gekennzeichnet, wobei Z1 die Anzahl der Kohlenstoffatome im Diamin und Z2 die Anzahl der Kohlenstoffatome in der Dicarbonsäure bezeichnet. Zur Bezeichnung von Copolyamiden werden die Komponenten in der Reihenfolge ihrer Mengenanteile, durch Schrägstriche getrennt, aufgeführt. So ist z. B. PA 66/610 das Copolyamid aus Hexamethylendiamin, Adipinsäure und Sebacinsäure. Für die erfindungsgemäß eingesetzten Monomere mit einer aromatischen oder cycloaliphatischen Gruppe werden folgende Buchstabenkürzel verwendet:
T = Terephthalsäure, I = Isophthalsäure, MXDA = m-Xylylendiamin, IPDA = Isophorondiamin,
PACM = 4,4'-Methylenbis(cyclohexylamin), MACM = 2,2'-Dimethyl-4,4'-methylenbis-(cyclohexylamin).

Im Folgenden umfasst der Ausdruck "C₁-C₄-Alkyl" unsubstituierte, geradkettige und verzweigte C₁-C₄-Alkylgruppen. Beispiele für C₁-C₄-Alkylgruppen sind insbesondere Methyl, Ethyl, Propyl, Isopropyl, n-Butyl, Isobutyl, sec.-Butyl, tert.-Butyl (1,1-Dimethylethyl).

Bei den im Folgenden genannten aliphatischen Dicarbonsäuren, cycloaliphatischen Dicarbonsäuren, aromatischen Dicarbonsäuren und Monocarbonsäuren können die Carboxylgruppen jeweils in nicht derivatisierter Form oder in Form von Derivaten vorliegen. Bei Dicarbonsäuren kann keine, eine oder beide Carboxylgruppe(n) in Form eines Derivats vorliegen. Geeignete Derivate sind Anhydride, Ester, Säurechloride, Nitrile und Isocyanate. Bevorzugte Derivate sind Anhydride oder Ester. Anhydride von Dicarbonsäuren können in monomerer oder in polymerer Form vorliegen. Bevorzugte Ester sind Alkylester und Vinylester, besonders bevorzugt C₁-C₄-Alkylester, insbesondere die Methylester oder Ethylester. Dicarbonsäuren liegen bevorzugt als Mono- oder Dialkylester, besonders bevorzugt Mono- oder Di-C₁-C₄-alkylester, insbesondere Monomethylester, Dimethylester, Monoethylester oder Diethylester, vor. Dicarbonsäuren liegen weiterhin bevorzugt als Mono- oder Divinylester vor. Dicarbonsäuren liegen weiterhin bevorzugt als gemischte Ester, besonders bevorzugt gemischte Ester mit unterschiedlichen C₁-C₄-Alkylkomponenten, insbesondere Methylethylester, vor.

Bevorzugt sind die zur Polyamidbildung geeigneten Komponenten ausgewählt unter
pA) unsubstituierten oder substituierten aromatischen Dicarbonsäuren und Derivaten von unsubstituierten oder substituierten aromatischen Dicarbonsäuren,
pB) unsubstituierten oder substituierten aromatischen Diaminen,
pC) aliphatischen oder cycloaliphatischen Dicarbonsäuren,
pD) aliphatischen oder cycloaliphatischen Diaminen,
pE) Monocarbonsäuren,
pF) Monoaminen,
pG) mindestens dreiwertigen Aminen,
pH) Lactamen,
pl) ω-Aminosäuren,
pK) von pA) bis pl) verschiedenen, damit cokondensierbaren Verbindungen.

Eine geeignete Ausführungsform sind aliphatische Polyamide. Für aliphatische Polyamide vom Typ PA Z1 Z2 (wie PA 66) gilt die Maßgabe, dass mindestens eine der Komponenten pC) oder pD) vorhanden sein muss und keine der Komponenten pA) und pB) vorhanden sein darf. Für aliphatische Polyamide vom Typ PA Z (wie PA 6 oder PA 12) gilt die Maßgabe, dass mindestens die Komponente pH) vorhanden sein muss.

Eine weitere geeignete Ausführungsform sind teilaromatische Polyamide. Für teilaromatische Polyamide gilt die Maßgabe, dass mindestens eine der Komponenten pA) oder pB) und mindestens eine der Komponenten pC) oder pD) vorhanden sein muss.

Die aromatischen Dicarbonsäuren pA) sind bevorzugt ausgewählt unter jeweils unsubstituierter oder substituierter Phthalsäure, Terephthalsäure, Isophthalsäure, Naphthalindicarbonsäuren oder Diphenyldicarbonsäuren und den Derivaten und Mischungen der zuvor genannten aromatischen Dicarbonsäuren.

Substituierte aromatische Dicarbonsäuren pA) weisen vorzugsweise wenigstens einen (z. B. 1, 2, 3 oder 4) C₁-C₄-Alkylrest auf. Insbesondere weisen substituierte aromatischen Dicarbonsäuren pA) 1 oder 2 C₁-C₄-Alkylreste auf. Diese sind vorzugsweise ausgewählt unter Methyl, Ethyl, n-Propyl, Isopropyl, n-Butyl, iso-Butyl, sec-Butyl und tert-Butyl, besonders bevorzugt Methyl, Ethyl und n-Butyl, insbesondere Methyl und Ethyl und speziell Methyl. Substituierte aromatische Dicarbonsäuren pA) können auch weitere funktionelle Gruppen tragen, welche die Amidierung nicht stören, wie beispielsweise 5-Sulfoisophthalsäure, ihre Salze und Derivate. Bevorzugtes Beispiel hierfür ist das Natriumsalz des 5-Sulfo-isophthalsäuredimethylesters.

Bevorzugt ist die aromatische Dicarbonsäure pA) ausgewählt unter unsubstituierter Terephthalsäure, unsubstituierter Isophthalsäure, unsubstituierten Naphthalindicarbonsäuren, 2-Chloroterephthalsäure, 2-Methylterephthalsäure, 5-Methylisophthalsäure und 5-Sulfo-isophthalsäure.

Besonders bevorzugt wird als aromatische Dicarbonsäure pA) Terephthalsäure, Isophthalsäure oder ein Gemisch aus Terephthalsäure und Isophthalsäure eingesetzt.

Bevorzugt weisen die teilaromatischen Polyamide einen Anteil von aromatischen Dicarbonsäuren an allen Dicarbonsäuren von wenigstens 50 mol%, besonders bevorzugt von 70 mol% bis 100 mol%, auf. In einer speziellen Ausführungsform weisen die teilaromatischen Polyamide einen Anteil an Terephthalsäure oder Isophthalsäure oder einem Gemisch aus Terephthalsäure und Isophthalsäure bezogen auf alle Dicarbonsäuren von wenigstens 50 mol%, bevorzugt von 70 mol% bis 100 mol%, auf.

Die aromatischen Diamine pB) sind bevorzugt ausgewählt unter Bis-(4-amino-phenyl)-methan, 3-Methylbenzidin, 2,2-Bis-(4-aminophenyl)-propan, 1,1-Bis-(4-aminophenyl)-cyclohexan, 1,2-Diaminobenzol, 1,4-Diaminobenzol, 1,4-Diaminonaphthalin, 1,5-Diaminonaphthalin, 1,3-Diaminotoluol(e), m-Xylylendiamin, N,N'-Dimethyl-4,4'-biphenyl-diamin, Bis-(4-methyl-aminophenyl)-methan, 2,2-Bis-(4-methylaminophenyl)-propan oder Gemische davon.

Die aliphatischen oder cycloaliphatischen Dicarbonsäuren pC) sind vorzugsweise ausgewählt unter Oxalsäure, Malonsäure, Bernsteinsäure, Glutarsäure, Adipinsäure, Pimelinsäure, Korksäure, Azelainsäure, Sebacinsäure, Undecan-α,ω)-dicarbonsäure, Dodecan-α,ω-dicarbonsäure, Maleinsäure, Fumarsäure oder Itaconsäure, cis- und trans-Cyclohexan-1,2-dicarbonsäure, cisund trans-Cyclohexan-1,3-dicarbonsäure, cis- und trans-Cyclohexan-1,4-dicarbonsäure, cisund trans-Cyclopentan-1,2-dicarbonsäure, cis- und trans-Cyclopentan-1,3-dicarbonsäure und Mischungen davon.

Die aliphatischen oder cycloaliphatischen Diamine pD) sind vorzugsweise ausgewählt unter Ethylendiamin, Propylendiamin, Tetramethylendiamin, Heptamethylendiamin, Hexamethylendiamin, Pentamethylendiamin, Octamethylendiamin, Nonamethylendiamin, Decamethylendiamin, Undecamethylendiamin, Dodecamethylendiamin, 2-Methylpentamethylendiamin, 2,2,4-Trimethylhexamethylendiamin, 2,4,4-Trimethylhexamethylendiamin, 5-Methylnonamethylendiamin, 2,4-Dimethyloctamethylendiamin, 5-Methylnonandiamin, Bis-(4-aminocyclohexyl)-methan, 3,3'-Dimethyl-4,4'diaminodicyclohexylmethan und Mischungen davon.

Besonders bevorzugt ist das Diamin pD) ausgewählt unter Hexamethylendiamin, 2-Methylpentamethylendiamin, Octamethylendiamin, Nonamethylendiamin, 2-Methyl-1,8-octamethylendiamin, Decamethylendiamin, Undecamethylendiamin, Dodecamethylendiamin, Bis-(4-aminocyclohexyl)-methan, 3,3'-Dimethyl-4,4'diaminodicyclohexylmethan und Mischungen davon.

In einer speziellen Ausführung enthalten die teilaromatischen Polyamide wenigstens ein Diamin pD) einpolymerisiert, das ausgewählt ist unter Hexamethylendiamin, Bis-(4-aminocyclohexyl)-methan (PACM), 3,3'-Dimethyl-4,4'diaminodicyclohexylmethan (MACM), Isophorondiamin (IPDA) und Mischungen davon.

In einer speziellen Ausführung enthalten die teilaromatischen Polyamide als Diamin pD) ausschließlich Hexamethylendiamin einpolymerisiert.

In einer weiteren speziellen Ausführung enthalten die teilaromatischen Polyamide als Diamin pD) ausschließlich Bis-(4-aminocyclohexyl)-methan einpolymerisiert.

In einer weiteren speziellen Ausführung enthalten die teilaromatischen Polyamide als Diamin pD) ausschließlich 3,3'-Dimethyl-4,4'diaminodicyclohexylmethan (MACM) einpolymerisiert.

In einer weiteren speziellen Ausführung enthalten die teilaromatischen Polyamide als Diamin pD) ausschließlich Isophorondiamin (IPDA) einpolymerisiert.

Die aliphatischen und die teilaromatischen Polyamide können wenigstens eine Monocarbonsäure pE) einpolymerisiert enthalten. Die Monocarbonsäuren pE) dienen dabei der Endverkappung der erfindungsgemäß hergestellten Polyamide. Geeignet sind grundsätzlich alle Monocarbonsäuren, die befähigt sind, unter den Reaktionsbedingungen der Polyamidkondensation mit zumindest einem Teil der zur Verfügung stehenden Aminogruppen zu reagieren. Geeignete Monocarbonsäuren pE) sind aliphatische Monocarbonsäuren, alicyclische Monocarbonsäuren und aromatische Monocarbonsäuren. Dazu zählen Essigsäure, Propionsäure, n-, iso- oder tert.-Buttersäure, Valeriansäure, Trimethylessigsäure, Capronsäure, Önanthsäure, Caprylsäure, Pelargonsäure, Caprinsäure, Undecansäure, Laurinsäure, Tridecansäure, Myristinsäure, Palmitinsäure, Stearinsäure, Pivalinsäure, Cyclohexancarbonsäure, Benzoesäure, Methylbenzoesäuren, α-Naphthalincarbonsäure, β-Naphthalincarbonsäure, Phenylessigsäure, Ölsäure, Ricinolsäure, Linolsäure, Linolensäure, Erucasäure, Fettsäuren aus Soja, Leinsamen, Rizinus und Sonnenblume, Acrylsäure, Methacrylsäure, Versatic^{®}-Säuren, Koch^{®}-Säuren und Mischungen davon.

Werden als Monocarbonsäuren pE) ungesättigte Carbonsäuren oder deren Derivate eingesetzt, kann es sinnvoll sein, in Gegenwart von handelsüblichen Polymerisationsinhibitoren zu arbeiten.

Besonders bevorzugt ist die Monocarbonsäure pE) ausgewählt unter Essigsäure, Propionsäure, Benzoesäure und Mischungen davon.

In einer speziellen Ausführung enthalten die aliphatischen und die teilaromatischen Polyamide als Monocarbonsäure pE) ausschließlich Propionsäure einpolymerisiert.

In einer weiteren speziellen Ausführung enthalten die aliphatischen und die teilaromatischen Polyamide als Monocarbonsäure pE) ausschließlich Benzoesäure einpolymerisiert.

In einer weiteren speziellen Ausführung enthalten die aliphatischen und die teilaromatischen Polyamide als Monocarbonsäure pE) ausschließlich Essigsäure einpolymerisiert.

Die aliphatischen und die teilaromatischen Polyamide können wenigstens ein Monoamin pF) einpolymerisiert enthalten. Dabei enthalten die aliphatischen Polyamide nur aliphatische Monoamine oder alicyclische Monoamine einpolymerisiert. Die Monoamine pF) dienen dabei der Endverkappung der erfindungsgemäß hergestellten Polyamide. Geeignet sind grundsätzlich alle Monoamine, die befähigt sind, unter den Reaktionsbedingungen der Polyamidkondensation mit zumindest einem Teil der zur Verfügung stehenden Carbonsäuregruppen zu reagieren. Geeignete Monoamine pF) sind aliphatische Monoamine, alicyclische Monoamine und aromatische Monoamine. Dazu zählen Methylamin, Ethylamin, Propylamin, Butylamin, Hexylamin, Heptylamin, Octylamin, Decylamin, Stearylamin, Dimethylamin, Diethylamin, Dipropylamin, Dibutylamin, Cyclohexylamin, Dicyclohexylamin, Anilin, Toluidin, Diphenylamin, Naphthylamin und Mischungen davon.

Zur Herstellung der aliphatischen und der teilaromatischen Polyamide kann zusätzlich wenigstens ein mindestens dreiwertiges Amin pG) eingesetzt werden. Hierzu gehören N'-(6-aminohexyl)hexan-1,6-diamin, N'-(12-aminododecyl)dodecan-1,12-diamin, N'-(6-aminohexyl)dodecan-1,12-diamin, N'-[3-(aminomethyl)-3,5,5-trimethyl-cyclohexyl]hexan-1,6-diamin, N'-[3-(aminomethyl)-3,5,5-trimethyl-cyclohexyl]dodecan-1,12-diamin, N'-[(5-amino-1,3,3-trimethyl-cyclohexyl)-methyl]hexan-1,6-diamin, N'-[(5-amino-1,3,3-trimethyl-cyclohexyl)methyl]dodecan-1,12-diamin, 3-[[[3-(aminomethyl)-3,5,5-trimethyl-cyclohexyl]amino]methyl]-3,5,5-trimethyl-cyclohexanamin, 3-[[(5-amino-1,3,3-trimethyl-cyclohexyl)methylamino]methyl]-3,5,5-trimethyl-cyclohexanamin, 3-(Aminomethyl)-N-[3-(aminomethyl)-3,5,5-trimethyl-cyclohexyl]-3,5,5-trimethyl-cyclohexanamin. Bevorzugt werden keine mindestens dreiwertigen Amine pG) eingesetzt.

Geeignete Lactame pH) sind ε-Caprolactam, 2-Piperidon (δ-Valerolactam), 2-Pyrrolidon (γ-Butyrolactam), Capryllactam, Önanthlactam, Lauryllactam und Mischungen davon.

Geeignete ω-Aminosäuren pl) sind 6-Aminocapronsäure, 7-Aminoheptansäure, 11-Aminoundecansäure, 12-Aminododecansäure und Mischungen davon.

Geeignete von pA) bis pl) verschiedene, damit cokondensierbare Verbindungen pK) sind wenigstens dreiwertige Carbonsäuren, Diaminocarbonsäuren, etc.

Geeignete Verbindungen pK) sind weiterhin 4-[(Z)-N-(6-Aminohexyl)-C-hydroxy-carbonimidoyl]benzoesäure, 3-[(Z)-N-(6-Aminohexyl)-C-hydroxy-carbonimidoyl]benzoesäure, (6Z)-6-(6-Aminohexylimino)-6-hydroxy-hexancarbonsäure, 4-[(Z)-N-[(5-Amino-1,3,3-trimethyl-cyclohexyl)-methyl]-C-hydroxy-carbonimidoyl]benzoesäure, 3-[(Z)-N-[(5-Amino-1,3,3-trimethyl-cyclohexyl)-methyl]-C-hydroxy-carbonimidoyl]benzoesäure, 4-[(Z)-N-[3-(Aminomethyl)-3,5,5-trimethyl-cyclohexyl]-C-hydroxy-carbonimidoyl]benzoesäure, 3-[(Z)-N-[3-(Aminomethyl)-3,5,5-trimethyl-cyclohexyl]-C-hydroxy-carbonimidoyl]benzoesäure und Mischungen davon.

Bevorzugt ist das Polyamid A ausgewählt unter PA 4, PA 5, PA 6, PA 7, PA 8, PA 9, PA 10, PA 11, PA 12,PA 46, PA 66, PA 666, PA 69, PA 610, PA 612, PA 96, PA 99, PA 910, PA 912, PA 1212, PA 6.T, PA 9.T, PA8.T, PA 10.T, PA 12.T, PA 6.I, PA 8.I, PA 9.I, PA 10.1, PA 12.1, PA 6.T/6, PA 6.T/10, PA 6.T/12, PA 6.T/6.I, PA6.T/8.T, PA 6.T/9.T, PA 6.T/10T, PA 6.T/12.T, PA 12.T/6.T, PA 6.T/6.I/6, PA 6.T/6.I/12, PA 6.T/6.I/6.10, PA 6.T/6.I/6.12, PA 6.T/6.6, PA 6.T/6.10, PA 6.T/6.12, PA 10.T/6, PA 10.T/11, PA 10.T/12, PA 8.T/6.T, PA 8.T/66, PA 8.T/8.I, PA 8.T/8.6, PA 8.T/6.I, PA 10.T/6.T, PA 10.T/6.6, PA 10.T/10.I, PA 10T/10.I/6.T, PA 10.T/6.I, PA 4.T/4.I/46, PA 4.T/4.I/6.6, PA 5.T/5.I, PA 5.T/5.I/5.6, PA 5.T/5.I/6.6, PA 6.T/6.I/6.6, PA MXDA.6, PA IPDA.I, PA IPDA.T, PA MACM.I, PA MACM.T, PA PACM.I, PA PACM.T, PA MXDA.I, PA MXDA.T, PA 6.T/IPDA.T, PA 6.T/MACM.T, PA 6.T/PACM.T, PA 6.T/MXDA.T, PA 6.T/6.I/8.T/8.I, PA 6.T/6.I/10.T/10.I, PA 6.T/6.I/IPDA.T/IPDA.I, PA 6.T/6.I/MXDA.T/MXDA.I, PA 6.T/6.I/MACM.T/MACM.I, PA 6.T/6.I/PACM.T/PACM.I, PA 6.T/10.T/IPDA.T, PA 6.T/12.T/IPDA.T, PA 6.T/10.T/PACM.T, PA 6.T/12.T/PACM.T, PA 10.T/IPDA.T, PA 12.T/IPDA.T und Copolymeren und Gemischen davon.

In einer bevorzugten Ausführungsform enthält die erfindungsgemäß eingesetzte Polyamid-Zusammensetzung als Komponente A) wenigstens ein aliphatisches Polyamid oder besteht aus aliphatischem Polyamid.

Das aliphatische Polyamid ist dann vorzugsweise ausgewählt ist unter PA 4, PA 5, PA 6, PA 7, PA 8, PA 9, PA 10, PA 11, PA 12, PA 46, PA 66, PA 666, PA 69, PA 610, PA 612, PA 96, PA 99, PA 910, PA 912, PA 1212, und Copolymeren und Gemischen davon.

Insbesondere ist das aliphatische Polyamid A) ausgewählt unter PA 6, PA 66 oder PA 12. Eine spezielle Ausführungsform sind Polyamid-Zusammensetzungen, bei denen die Komponente A) PA 6 oder PA 66 enthält oder aus PA 6, PA 66 oder deren Gemischen besteht.

Ein teilaromatisches Polyamid bzw. Copolyamid ist vorzugsweise ausgewählt ist unter PA 6.T, PA 9.T, PA 10.T, PA 12.T, PA 6.I, PA 9.I, PA 10.1, PA 12.1, PA 6.T/6.I, PA 6.T/6, PA6.T/8.T, PA 6.T/10T, PA 10.T/6.T, PA 6.T/12.T, PA12.T/6.T, PA IPDA.I, PA IPDA.T, PA 6.T/IPDA.T, PA 6.T/6.I/IPDA.T/IPDA.I, PA 6.T/10.T/IPDA.T, PA 6.T/12.T/IPDA.T, PA 6.T/10.T/PACM.T, PA 6.T/12.T/PACM.T, PA 10.T/IPDA.T, PA 12.T/IPDA.T und Copolymeren und Gemischen davon.

Die folgenden Angaben des zahlenmittleren Molekulargewichts Mₙ und des gewichtsmittleren Molekulargewichts M_{w} im Rahmen dieser Erfindung beziehen sich auf eine Bestimmung mittels Gelpermeationschromatographie (GPC). Zur Kalibrierung wurde beispielsweise PMMA als Polymerstandard mit einer niedrigen Polydispersität eingesetzt.

Das synthetische Polyamid A) weist vorzugsweise ein zahlenmittleres Molekulargewicht Mₙ in einem Bereich von 8000 bis 50000 g/mol, besonders bevorzugt von 10000 bis 35000 g/mol auf.

Das synthetische Polyamid A) weist vorzugsweise ein gewichtsmittleres Molekulargewicht Mₙ in einem Bereich von 15000 bis 200000 g/mol, besonders bevorzugt von 20000 bis 125000 g/mol auf.

Die Polyamide weisen vorzugsweise eine Polydispersität PD (= M_{w}/Mₙ) von höchstens 6, besonders bevorzugt von höchstens 5, insbesondere von höchstens 3,5, auf.

Die vorliegende Erfindung betrifft auch die Verwendung spezieller Polyamid-Zusammensetzungen, die auf aliphatischen Polyamiden und Copolyamiden/Terpolyamiden basieren. Beim Einsatz einer Polyamid-Mischung aus aliphatischem Polyamid A1) und aliphatischem Copolyamid oder Terpolyamid A2) beträgt das Gewichtsverhältnis von A1) zu A2) vorzugsweise 55:45 bis 95:5. Die Polyamid-Mischung bildet dann die Komponente A).

In den erfindungsgemäß eingesetzten Polyamid-Zusammensetzungen liegen dann in der Polyamid-Mischung A) aliphatisches Polyamid A1) und aliphatisches Copolyamid oder Terpolyamid A2) vor. Die entsprechenden Komponenten können aus den vorstehend aufgeführten Komponenten ausgewählt sein.

Vorzugsweise ist das aliphatische Polyamid A1) ausgewählt aus: PA 4, PA 5, PA 6, PA 7, PA 8, PA 9, PA 10, PA 11, PA 12, PA46, PA 66, PA 69, PA 610, PA 612, PA 96, PA 99, PA 910, PA 912, PA 1212.

Besonders bevorzugt ist das aliphatische Polyamid A1) ausgewählt aus Polyamid 6, Polyamid 66 und Gemischen davon.

Das aliphatische Copolyamid oder Terpolyamid A2) ist vorzugsweise aufgebaut aus den Monomeren von zwei oder drei Polyamiden, ausgewählt aus PA 4, PA 5, PA 6, PA 7, PA 8, PA 9, PA 10, PA 11, PA 12, PA46, PA 66, PA 69, PA 610, PA612, PA 96, PA 99, PA910, PA912, PA 1212.

Spezifische Beispiele von Copolyamiden sind PA 66/6, PA 66/68, PA 66/610, PA 66/612, PA 66/10, PA 66/12, PA 6/68, PA 6/610, PA 6/612, PA 6/10, PA 6/12. Beispiele geeigneter Terpolymere sind PA 6/66/610, PA 6/66/69, PA 6/66/11, PA 6/66/12, PA 6/610/11, PA 6/610/12, 6/66/PACM.

Bevorzugt ist das aliphatische Copolyamid ein PA 6/PA 66-Copolymer.

Geeignete aliphatische Polyamide und Copolyamide/Terpolyamide sind zudem in EP-B-1 060 216 genannt.

Das Gewichtsverhältnis von aliphatischem Polyamid A1) zu aliphatischem Copolyamid oder Terpolyamid A2) beträgt 55:45 bis 95:5, vorzugsweise 60:40 bis 90:10, insbesondere 70:30 bis 90:10.

Vorzugsweise sollte der Kristallisationspunkt (Kristallisationstemperatur) der Polyamid-Mischung A) unter den Kristallisationspunkten (Kristallisationstemperaturen) des aliphatischen Polyamids A1) und des aliphatischen Copolyamids/Terpolyamids A2) liegen. Auch bei der erfindungsgemäßen Verwendung und dem erfindungsgemäßen Verfahren sollte vorzugsweise der Kristallisationspunkt der Mischung aus dem mindestens einen Polyamid und mindestens einem Copolyamid oder Terpolyamid unter den Kristallisationspunkten des mindestens einen Polyamids und mindestens einen Copolyamids oder Terpolyamids liegen.

Damit hat der Zusatz des Copolyamids/Terpolyamids vorzugsweise einen den Kristallisationspunkt vermindernden Effekt in der Polyamid-Zusammensetzung. Die Verminderung oder Senkung des Kristallisationspunktes kann dabei mittels DSC-Messung (differentiating scanning calorimetry) ermittelt werden.

Als Komponente B) enthalten die erfindungsgemäßen Polyamid-Zusammensetzungen gegebenenfalls Glasfasern. Beim Vorliegen von Glasfasern verringert sich die maximal zulässige Menge der Komponente A) um die minimal vorliegende Glasfasermenge.

Speziell werden Schnittglasfasern eingesetzt. Insbesondere umfasst die Komponente B) Glasfasern, wobei bevorzugt Kurzfasern eingesetzt werden. Diese weisen vorzugsweise eine Länge im Bereich von 2 bis 50 mm und einem Durchmesser von 5 bis 40 µm auf. Alternativ können Endlosfasern (Rovings) eingesetzt werden. Geeignet sind Fasern mit kreisförmiger und/oder nicht-kreisförmiger Querschnittsfläche, wobei im letzteren Fall das Abmessungsverhältnis von der Hauptquerschnittsachse zur Nebenquerschnittsachse insbesondere > 2 ist, bevorzugt im Bereich von 2 bis 8 und besonders bevorzugt im Bereich von 3 bis 5 liegt.

In einer speziellen Ausführung umfasst die Komponente B) sogenannte "flache Glasfasern". Diese weisen speziell eine ovale oder elliptische oder eine mit Einschnürung(en) versehene elliptische (sog. "Kokon"- oder "cocoon"-Faser) oder rechteckige oder nahezu rechteckige Querschnittsfläche auf. Dabei werden Glasfasern mit nicht-kreisförmiger Querschnittsfläche und einem Abmessungsverhältnis von der Hauptquerschnittsachse zur Nebenquerschnittsachse von mehr als 2, bevorzugt von 2 bis 8, insbesondere von 3 bis 5, bevorzugt eingesetzt.

Zur Verstärkung der erfindungsgemäßen Formmassen können auch Mischungen von Glasfasern mit kreisförmigem und nicht-kreisförmigem Querschnitt verwendet werden. In einer speziellen Ausführung überwiegt der Anteil an flachen Glasfasern, wie oben definiert, d.h. sie machen mehr als 50 Gew.-% der Gesamtmasse der Fasern aus.

Wenn als Komponente B) Rovings von Glasfasern eingesetzt werden, weisen diese vorzugsweise einen Durchmesser von 10 bis 20 µm, bevorzugt von 12 bis 18 µm, auf. Dabei kann der Querschnitt der Glasfasern rund, oval, elliptisch, nahezu rechteckig oder rechteckig sein. Besonders bevorzugt werden sogenannte flache Glasfasern mit einem Verhältnis der Querschnittsachsen von 2 bis 5. Insbesondere werden E-Glasfasern verwendet. Es können aber auch alle anderen Glasfasersorten, wie z. B. A-, C-, D-, M-, S-, R-Glasfasern, oder beliebige Mischungen davon oder Mischungen mit E-Glasfasern eingesetzt werden.

Die erfindungsgemäßen Polyamid-Formmassen können durch die bekannten Verfahren zur Herstellung von langfaserverstärktem Stäbchengranulat hergestellt werden, insbesondere durch Pultrusionsverfahren, bei denen der endlose Faserstrang (Roving) mit der Polymerschmelze vollständig durchtränkt und anschließend abgekühlt und geschnitten wird. Das auf diese Art und Weise erhaltene langfaserverstärkte Stäbchengranulat, das bevorzugt eine Granulatlänge von 3 bis 25 mm, insbesondere von 4 bis 12 mm, aufweist, kann mit den üblichen Verarbeitungsverfahren, wie z. B. Spritzgießen oder Pressen, zu Formteilen weiterverarbeitet werden.

Als Komponente C) enthalten die erfindungsgemäßen Polyamid-Zusammensetzungen gegebenenfalls einen oder mehrere Wärmestabilisatoren.

Als Komponente C) können die erfindungsgemäßen Formmassen vorzugsweise 0,01 bis 2 Gew.-%, besonders bevorzugt 0,02 bis 1 Gew.-%, insbesondere 0,05 bis 0,5 Gew.-% mindestens eines Wärmestabilisators, bezogen auf das Gesamtgewicht der Zusammensetzung, enthalten.

Bevorzugt sind die Wärmestabilisatoren ausgewählt unter Kupferverbindungen, sekundären aromatischen Aminen, sterisch gehinderten Phenolen, Phosphiten, Phosphoniten und Mischungen davon.

Sofern eine Kupferverbindung verwendet wird, beträgt vorzugsweise die Menge an Kupfer 0,003 bis 0,5 Gew.-%, insbesondere 0,005 bis 0,3 Gew.-% und besonders bevorzugt 0,01 bis 0,2 Gew.-%, bezogen auf das Gesamtgewicht der Zusammensetzung.

Sofern Stabilisatoren auf Basis sekundärer aromatischer Amine verwendet werden, beträgt die Menge an diesen Stabilisatoren vorzugsweise 0,2 bis 2 Gew.-%, besonders bevorzugt 0,2 bis 1,5 Gew.-%, bezogen auf das Gesamtgewicht der Zusammensetzung.

Sofern Stabilisatoren auf Basis sterisch gehinderter Phenole verwendet werden, beträgt die Menge an diesen Stabilisatoren vorzugsweise 0,07 bis 1,5 Gew.-%, besonders bevorzugt 0,1 bis 1 Gew.-%, bezogen auf das Gesamtgewicht der Zusammensetzung.

Sofern Stabilisatoren auf Basis von Phosphiten und/oder Phosphoniten verwendet werden, beträgt die Menge an diesen Stabilisatoren vorzugsweise 0,1 bis 1,5 Gew.-%, besonders bevorzugt von 0,2 bis 1 Gew.-%, bezogen auf das Gesamtgewicht der der Zusammensetzung.

Geeignete Verbindungen C) des ein- oder zweiwertigen Kupfers sind z. B. Salze des ein- oder zweiwertigen Kupfers mit anorganischen oder organischen Säuren oder ein- oder zweiwertigen Phenolen, die Oxide des ein- oder zweiwertigen Kupfers oder die Komplexverbindungen von Kupfersalzen mit Ammoniak, Aminen, Amiden, Lactamen, Cyaniden oder Phosphinen, bevorzugt Cu(I)- oder Cu(II)-Salze der Halogenwasserstoffsäuren, der Cyanwasserstoffsäuren oder die Kupfersalze der aliphatischen Carbonsäuren. Besonders bevorzugt sind die einwertigen Kupferverbindungen CuCI, CuBr, Cul, CuCN und Cu₂O sowie die zweiwertigen Kupferverbindungen CuCl₂, CuSO₄, CuO, Kupfer(II)acetat oder Kupfer(II)stearat.

Die Kupferverbindungen sind handelsüblich bzw. ihre Herstellung ist dem Fachmann bekannt. Die Kupferverbindung kann als solche oder in Form von Konzentraten eingesetzt werden. Unter Konzentrat ist dabei ein Polymer, vorzugsweise von gleicher chemischer Natur wie die Komponente A) zu verstehen, welches das Kupfersalz in hoher Konzentration enthält. Der Einsatz von Konzentraten ist ein übliches Verfahren und wird besonders häufig dann angewandt, wenn sehr geringe Mengen eines Einsatzstoffes zu dosieren sind. Vorteilhafterweise werden die Kupferverbindungen in Kombination mit weiteren Metallhalogeniden, insbesondere Alkalihalogeniden, wie Nal, Kl, NaBr, KBr, eingesetzt, wobei das molare Verhältnis von Metallhalogenid zu Kupferhalogenid 0,5 bis 20, bevorzugt 1 bis 10 und besonders bevorzugt 3 bis 7, beträgt.

Besonders bevorzugte Beispiele für erfindungsgemäß einsetzbare Stabilisatoren auf Basis sekundärer aromatischer Amine sind Addukte aus Phenylendiamin mit Aceton (Naugard^{®} A), Addukte aus Phenylendiamin mit Linolensäure, 4,4`-Bis(α,α-dimethylbenzyl)diphenylamin (Naugard^{®} 445), N,N`-Dinaphthyl-p-phenylendiamin, N-Phenyl-N'-cyclohexyl-p-phenylendiamin oder Mischungen von zwei oder mehreren davon.

Bevorzugte Beispiele für erfindungsgemäß einsetzbare Stabilisatoren auf Basis sterisch gehinderter Phenole sind N,N'-Hexamethylen-bis-3-(3,5-di-tert-butyl-4-hydroxyphenyl)-propionamid (Irganox^{®} 1098), Bis-(3,3-bis-(4`-hydroxy-3`-tert-butylphenyl)-butansäure)-glykolester, 2,1`-Thioethylbis-(3-(3,5-di.tert-butyl-4-hydroxyphenyl)-propionat, 4,4`-Butyliden-bis-(3-methyl-6-tert.-butylphenol), Triethylenglykol-3-(3-tert-butyl-4-hydroxy-5-methylphenyl)-propionat oder Mischungen von zweien oder mehreren dieser Stabilisatoren.

Bevorzugte Phosphite und Phosphonite sind Triphenylphosphit, Diphenylalkylphosphit, Phenyldialkylphosphit, Tris(nonylphenyl)phosphit, Trilaurylphosphit, Trioctadecylphosphit, Distearylpentaerythritoldiphosphit, Tris(2,4-di-tert-butylphenyl)phosphit, Diisodecylpentaerythritoldiphosphit, Bis(2,4-di-tert-butylphenyl)pentaerythritoldiphosphit, Bis(2,6-di-tert-butyl-4-methylphenyl)-pentaerythritoldiphosphit, Diisodecyloxypentaerythritoldiphosphit, Bis(2,4-di-tert-butyl-6-methylphenyl)pentaerythritoldiphosphit, Bis(2,4,6-tris-(tert-butylphenyl))pentaerythritoldiphosphit, Tristearylsorbitoltriphosphit, Tetrakis-(2,4-di-tert-butylphenyl)-4,4'-biphenylendiphosphonit, 6-Isooctyloxy-2,4,8,10-tetra-tert-butyl-12H-dibenz-[d,g]-1,3,2-dioxaphosphocin, 6-Fluoro-2,4,8,10-tetra-tert-butyl-12-methyl-dibenz[d,g]-1,3,2-dioxaphosphocin, Bis(2,4-di-tert-butyl-6-methylphenyl)methylphosphit und Bis(2,4-di-tert-butyl-6-methylphenyl)ethylphosphit. Insbesondere werden bevorzugt Tris[2-tert-butyl-4-thio(2'-methyl-4'-hydroxy-5'-tert-butyl)-phenyl-5-methyl]phenylphosphit und Tris(2,4-di-tert-butylphenyl)phosphit (Hostanox^{®} PAR24: Handelsprodukt der Firma BASF SE).

Eine bevorzugte Ausführungsform des Wärmestabilisators besteht in der Kombination von organischen Hitzestabilisatoren (insbesondere Hostanox^{®} PAR 24 und Irganox^{®} 1010), einem Bisphenol A basiertem Epoxid (insbesondere Epikote^{®} 1001) und einer Kupferstabilisierung auf Basis von Cul und Kl. Eine kommerziell erhältliche Stabilisatormischung, bestehend aus organischen Stabilisatoren und Epoxiden ist beispielsweise Irgatec^{®} NC66 von BASF SE. Insbesondere bevorzugt wird eine Wärmestabilisierung ausschließlich auf Basis von Cul und Kl. Neben dem Zusatz von Kupfer oder Kupferverbindungen wird die Verwendung weiterer Übergangsmetallverbindungen, insbesondere Metallsalze oder Metalloxide der Gruppe VB, VIB, VIIB oder VIIIB des Periodensystems, ausgeschlossen. Darüber hinaus werden der erfindungsgemäßen Formmasse bevorzugt keine Übergangsmetalle der Gruppe VB, VIB, VIIB oder VIIIB des Periodensystems, wie z. B. Eisen- oder Stahlpulver, zugesetzt. Besonders bevorzugt ist auch der Einsatz von Irganox^{®} 1098.

Speziell bevorzugt ist der Einsatz von Kupferverbindungen, speziell einwertigen Kupferverbindungen, und Stabilisatoren auf Basis sterisch gehinderter Phenole, wie Irganox^{®} 1098, und Gemischen davon. Die speziell bevorzugte Einsatzmenge liegt im Bereich von 0,05 bis 0,5 Gew.-%, speziell 0,07 bis 0,2 Gew.-%.

Als Komponente D) wird mindestens ein mehrwertiger Alkohol mit mehr als zwei Hydroxylgruppen eingesetzt. Entsprechende Polyole sind beispielsweise in WO 2010/014801 beschrieben, siehe dort insbesondere Seite 14, Zeile 29, bis Seite 16, Zeile 7.

Die mehrwertigen Alkohole können ausgewählt sein aus aliphatischen Hydroxylverbindungen mit mehr als zwei Hydroxylgruppen, aliphatisch-cycloaliphatischen Verbindungen mit mehr als zwei Hydroxylgruppen, cycloaliphatischen Verbindungen mit mehr als zwei Hydroxylgruppen, aromatischen Verbindungen und Sacchariden.

Eine aliphatische Kette in mehrwertigen Alkoholen kann über Kohlenstoff hinaus auch Heteroatome enthalten, wie Stickstoff-, Sauerstoff- oder Schwefelatome. Ein cycloaliphatischer Ring im mehrwertigen Alkohol kann ein Monocyclus sein oder Teil eines dicyclischen oder polycyclischen Ringsystems. Er kann carbocyclisch oder heterocyclisch sein. Die mehrwertigen Alkohole können einen oder mehrere Substituenten enthalten, wie Ether, Carbonsäure, Carbonsäureamid, oder Carbonsäureestergruppen oder können Polyvinylalkoholcopolymere, z. B. Ethylenvinylalkoholcopolymere, sein. Idealerweise haben diese Copolymere einen MFR (210 °C / 2,16 kg) zwischen 2 und 20 g / 10 Min.

Beispiele geeigneter mehrwertiger Alkohole, vorzugsweise mit einem Zahlenmittel des Molekulargewichts (Mₙ) von weniger als 2000, sind Triole, wie Glyzerin, Trimethylolpropan, 2,3-Di-(2'-hydroxyethyl)cyclohexan-1-ol, Hexan-1,2,6-triol, 1,1,1-tris(Hydroxymethyl)ethan, 3-(2'-Hydroxyethoxy)propan-1,2-diol, 3-(2'-Hydroxypropoxy)propan-1,2-diol, 2-(2'-Hydroxyethoxy)-hexan-1,2-diol, 6-(2`-Hydroxypropoxy)hexan-1,2-diol, 1,1,1-tris-[(2`-Hydroxyethoxy)methyl]ethan, 1,1,1-tris-[(2`-Hydroxypropoxy)methyl]propan, 1,1,1-tris-(4`-Hydroxyphenyl)ethan, 1,1,1-tris-(Hydroxyphenyl)propan, 1,1,3-tris-(Dihydroxy-3-methylphenyl)propan, 1,1,4-tris-(Dihydroxyphenyl)butan, 1,1,5-tris-(Hydroxyphenyl)-3-methylpentane, Di-trimethylopropan, Trimethylolpropanethoxylate oder Trimethylolpropanpropoxylate, Polyole, wie Pentaerythrit, Dipentaerythrit und Tripentaerythrit, und Saccharide, wie Cyclodextrin, D-Mannose, Glucose, Galactose, Sucrose, Fructose, Yylose, Arabinose, D-Mannit, D-Sorbit, D- oder L-Arabit, Yylit, Idit, Talit, Allit, Altrit, Guilit, Erythrit, Threit und D-Gulon-γ-lacton.

In bevorzugten mehrwertigen Alkoholen sind die Hydroxylgruppen jeweils an Kohlenstoffatome gebunden, die voneinander durch mindestens ein Atom, vorzugsweise Kohlenstoffatom, getrennt sind. Entsprechend ist der mehrwertige Alkohol vorzugsweise Pentaerythrit, Dipentaerythrit, Tripentaerythrit, Trimethylolpropan, D-Mannit, D-Sorbit oder Xylit. Besonders bevorzugt ist der mehrwertige Alkohol Dipentaerythrit und/oder Tripentaerythrit. Am meisten bevorzugt ist Dipentaerythrit.

Als Komponente E) können die Polyamid-Zusammensetzungen weitere Zusatzstoffe enthalten. Bei Mitverwendung der Komponente E) verringert sich die Obergrenze der Komponente A) entsprechend.

Als Komponente E) enthalten die erfindungsgemäßen Zusammensetzungen 0 bis 20 Gew.-%, vorzugsweise 0 bis 10 Gew.-%, insbesondere 0 bis 5 Gew.-% weiterer Zusatzstoffe. Bei der Mitverwendung derartiger Zusatzstoffe beträgt die Mindestmenge 0,1 Gew.-%, vorzugsweise 1 Gew.-%, insbesondere 3 Gew.-%.

Bei Mitverwendung der Komponente E) vermindert sich die Obergrenze der Komponente A) entsprechend. Bei einer Mindestmenge von 0,1 Gew.-% der Komponente E) beträgt so beispielsweise die Obergrenze der Menge der Komponente A) 89,88 Gew.-%.

Als weitere Zusatzstoffe kommen von Glasfasern verschiedene Füll- und Verstärkungsstoffe, von Komponente A) verschiedene thermoplastische Polymere oder weitere Additive in Betracht.

Der Begriff "Füllstoff und Verstärkungsstoff" (= mögliche Komponente E)) wird im Rahmen der Erfindung breit verstanden und umfasst partikulare Füllstoffe, Faserstoffe und beliebige Übergangsformen. Partikuläre Füllstoffe können eine weite Bandbreite von Teilchengrößen aufweisen, die von staubförmigen bis grobkörnigen Partikeln reichen. Als Füllmaterial kommen organische oder anorganische Füll- und Verstärkungsstoffe in Frage. Beispielsweise können anorganische Füllstoffe, wie Kaolin, Kreide, Wollastonit, Talkum, Calciumcarbonat, Silikate, Titandioxid, Zinkoxid, Graphit, Glaspartikel, z. B. Glaskugeln, nanoskalige Füllstoffe, wie Kohlenstoff-Nanoröhren (carbon nanotubes), nanoskalige Schichtsilikate, nanoskaliges Aluminiumoxid (Al₂O₃), nanoskaliges Titandioxid (TiO₂), Graphen, dauerhaft magnetische bzw. magnetisierbare Metallverbindungen und/oder Legierungen, Schichtsilikate und nanoskaliges Siliciumdioxid (SiO₂), eingesetzt werden. Die Füllstoffe können auch oberflächenbehandelt sein.

Als Schichtsilikate können in den erfindungsgemäßen Formmassen z. B. Kaoline, Serpentine, Talkum, Glimmer, Vermiculite, Illite, Smectite, Montmorillonit, Hectorit, Doppelhydroxide oder Gemische davon eingesetzt werden. Die Schichtsilikate können oberflächenbehandelt oder unbehandelt sein.

Weiterhin können ein oder mehrere Faserstoffe zum Einsatz kommen. Diese sind vorzugsweise ausgewählt aus bekannten anorganischen Verstärkungsfasern, wie Borfasern, Kohlenstofffasern, Kieselsäurefasern, Keramikfasern und Basaltfasern; organischen Verstärkungsfasern, wie Aramidfasern, Polyesterfasern, Nylonfasern, Polyethylenfasern und Naturfasern, wie Holzfasern, Flachsfasern, Hanffasern und Sisalfasern.

Insbesondere bevorzugt ist der Einsatz von Kohlenstofffasern, Aramidfasern, Borfasern, Metallfasern oder Kaliumtitanatfasern.

Die von Komponente A) verschiedenen thermoplastischen Polymere sind vorzugsweise ausgewählt unter
- Homo- oder Copolymeren, die in einpolymerisierter Form wenigstens ein Monomer enthalten, das ausgewählt ist unter C₂-C₁₀ Monoolefinen, wie beispielsweise Ethylen oder Propylen, 1,3-Butadien, 2-Chlor-1,3-Butadien, Vinylchlorid, Vinylidenchlorid, Vinylidenfluorid, Tetrafluorethylen, Glycidylacrylat, Glycidylmethacrylat, Acrylaten und Methacrylaten mit Alkoholkomponenten von verzweigten und unverzweigten C₁-C₁₀-Alkoholen, Vinylaromaten, wie beispielsweise Styrol, Acrylnitril, Methacrylnitril, α,β-ethylenisch ungesättigten Mono- und Dicarbonsäuren, und Maleinsäureanhydrid;
- Homo- und Copolymeren von Vinylacetalen,
- Polyvinylestern,
- Polyvinylpyrrolidon bzw. Polyvinylpyrrolidon Copolymere (PVP)
- Polycarbonaten (PC),
- Polyestern, wie Polyalkylenterephthalaten, Polyhydroxyalkanoaten (PHA), Polybutylensuccinaten (PBS), Polybutylensuccinatadipaten (PBSA),
- Polyethern,
- Polyetherketonen,
- thermoplastischen Polyurethanen (TPU),
- Polysulfiden,
- Polysulfonen,
- Polyethersulfonen,
- Cellulosealkylestern
und Mischungen davon.

Zu nennen sind beispielsweise Polyacrylate mit gleichen oder verschiedenen Alkoholresten aus der Gruppe der C₄-C₈-Alkohole, besonders des Butanols, Hexanols, Octanols und 2-Ethylhexanols, Polymethylmethacrylat (PMMA), Methylmethacrylat-Butylacrylat-Copolymere, AcrylnitrilButadien-Styrol-Copolymere (ABS), Ethylen-Propylen-Copolymere, Ethylen-Propylen-Dien-Copolymere (EPDM), Polystyrol (PS), Styrol-Acrylnitril-Copolymere (SAN), Acrylnitril-Styrol-Acrylat (ASA), Styrol-Butadien-Methylmethacrylat-Copolymere (SBMMA), Styrol-Maleinsäureanhydrid-Copolymere, Styrol-Methacrylsäure-Copolymere (SMA), Polyoxymethylen (POM), Polyvinylalkohol (PVAL), Polyvinylacetat (PVA), Polyvinylbutyral (PVB), Polycaprolacton (PCL), Polyhydroxybuttersäure (PHB), Polyhydroxyvaleriansäure (PHV), Polymilchsäure (PLA), Ethylcellulose (EC), Celluloseacetat (CA), Cellulosepropionat (CP) oder Cellulose-Acetat/Butyrat (CAB).

Bevorzugt handelt es sich bei dem in der erfindungsgemäßen Formmasse enthaltenen wenigstens einem thermoplastischen Polymer um Polyvinylchlorid (PVC), Polyvinylbutyral (PVB), Homo- und Copolymere von Vinylacetat, Homo- und Copolymere von Styrol, Polyacrylate, thermoplastische Polyurethane (TPU) oder Polysulfide.

Es kann vorteilhaft sein, Nigrosin (Solvent Black 7, CAS-Nr. 8005-02-5) und/oder Solvent Black 28 (CAS-Nr. 12237-23-91) einzusetzen und gegebenenfalls mit wenigstens einem weiteren Farbmittel zu kombinieren. Die Komponente E) ist dann vorzugsweise ausgewählt unter von C) verschiedenen nicht nukleierenden Farbmitteln. Dazu zählen nicht nukleierende Farbstoffe, nicht nukleierende Pigmente und Mischungen davon. Beispiele für nicht nukleierende Farbstoffe sind Solvent Yellow 21 (im Handel als Oracet^{®} Yellow 160 FA von der Firma BASF SE erhältlich) oder Solvent Blue 104 (im Handel als Solvaperm^{®} Blue 2B von der Firma Clariant erhältlich). Beispiele für nicht nukleierende Pigmente sind Pigment Brown 24 (im Handel als Sicotan^{®} Yellow K 2011 FG von der Firma BASF SE erhältlich). Auch kommen als Komponente E) geringe Mengen wenigstens eines Weißpigments in Frage. Geeignete Weißpigmente sind Titandioxid (Pigment White 6), Bariumsulfat (Pigment White 22), Zinksulfid (Pigment White 7) etc. In einer speziellen Ausführung enthält die erfindungsgemäße Formmasse als Komponente E) 0,001 bis 0,5 Gew.-% wenigstens eines Weißpigments. Beispielsweise kann die Formmasse 0,05 Gew.-% Titandioxid der Marke Kronos 2220 der Firma Kronos enthalten.

Die Art und Menge der Zugabe richtet sich nach dem Farbton, d. h. der gewünschten Nuance des Schwarztones. Zum Beispiel kann mit Solvent Yellow 21 der Farbton des Schwarztones im CIELAB-Farbenraum von beispielsweise b* = -1,0 in Richtung +b*, also in Richtung Gelb verschoben werden. Dem Fachmann ist diese Methode als Farbnuancierung bekannt. Die Messung erfolgt nach DIN 6174 "Farbmetrische Bestimmung von Farbmaßzahlen und Farbabständen im angenähert gleichförmigen CIELAB-Farbenraum" bzw. der Nachfolgenorm.

Als Komponente E) kann auch Ruß mitverwendet werden. Beispielsweise enthalten die erfindungsgemäßen Zusammensetzungen 0,01 bis 1 Gew.-%, vorzugsweise 0,03 bis 0,5 Gew.-%, insbesondere 0,05 bis 0,3 Gew.-%, Ruß. Ruß (Carbon Black), auch als Industrieruß bezeichnet, ist eine Modifikation des Kohlenstoffs mit hohem Oberfläche-zu-Volumen-Verhältnis und besteht zu 80 bis 99,5 Gew.-% aus Kohlenstoff. Die spezifische Oberfläche von Industrieruß beträgt etwa 10 bis 1500 m²/g (BET). Der Ruß kann als Gasruß, Furnaceruß, Flammruß, Spaltruß oder Acetylenruß hergestellt sein. Der Korndurchmesser liegt im Bereich von 8 bis 500 nm, typischerweise 8 bis 110 nm. Ruß wird auch als Pigment Black 7 oder Lamp Black 6 bezeichnet. Farbruße sind nanoteilige Ruße, die durch ihre Feinheit zunehmend den braunen Grundton üblicher Ruße verlieren.

Geeignete bevorzugte Additive E) sind Schmiermittel, Flammschutzmittel, Lichtschutzmittel (UV-Stabilisatoren, UV-Absorber oder UV-Blocker), Farbstoffe, Nukleierungsmittel, metallische Pigmente, Metallflitter, metallbeschichtete Partikel, Antistatika, Leitfähigkeitsadditive, Entformungsmittel, optische Aufheller, Entschäumer etc.

Die erfindungsgemäßen Formmassen enthalten vorzugsweise 0 bis 15 Gew.-%, besonders bevorzugt 0 bis 10 Gew.-%, bezogen auf das Gesamtgewicht der Zusammensetzung, mindestens eines Flammschutzmittels als Additiv E). Wenn die erfindungsgemäßen Formmassen mindestens ein Flammschutzmittel enthalten, so vorzugsweise in einer Menge von 0,01 bis 15 Gew.-%, besonders bevorzugt von 0,1 bis 10 Gew.-%, bezogen auf das Gesamtgewicht der Zusammensetzung. Als Flammschutzmittel kommen halogenhaltige und halogenfreie Flammschutzmittel und deren Synergisten in Frage (siehe auch Gächter/Müller, 3. Ausgabe, 1989, Hanser Verlag, Kapitel 11). Bevorzugte halogenfreie Flammschutzmittel sind roter Phosphor, Phosphinsäure- oder Diphosphinsäuresalze und/oder stickstoffhaltige Flammschutzmittel, wie Melamin, Melamincyanurat, Melaminsulfat, Melaminborat, Melaminoxalat, Melaminphosphat (prim., sec.) oder sec. Melaminpyrophosphat, Neopentylglycolborsäuremelamin, Guanidin und dem Fachmann bekannte Derivate davon, sowie polymeres Melaminphosphat (CAS Nr. 56386-64-2 bzw. 218768-84-4 sowie EP-A-1 095 030), Ammoniumpolyphosphat, Trishydroxyethylisocyanurat (gegebenenfalls auch Ammoniumpolyphosphat in Mischung mit Trishydroxyethylisocyanurat) (EP-A-058 456 7). Weitere N-haltige oder P-haltige Flammschutzmittel oder als Flammschutzmittel geeignete PN-Kondensate können der DE-A-10 2004 049 342 entnommen werden, ebenso die hierfür üblichen Synergisten wie Oxide oder Borate. Geeignete halogenhaltige Flammschutzmittel sind z. B. oligomere bromierte Polycarbonate (BC 52 Great Lakes) oder Polypentabrombenzylacrylate mit N größer 4 (FR 1025 Dead sea bromine), Umsetzungsprodukte aus Tetrabrom-bis-phenol-A mit Epoxiden, bromierte oligomere oder polymere Styrole, Dechloran, welche meist mit Antimonoxiden als Synergisten eingesetzt werden (für Einzelheiten und weitere Flammschutzmittel: siehe DE-A-10 2004 050 025).

Die Herstellung der Polyamid-Formmassen erfolgt nach an sich bekannten Verfahren. Dazu zählt das Mischen der Komponenten in den entsprechenden Gewichtsanteilen. Vorzugsweise geschieht das Mischen der Komponenten bei erhöhten Temperaturen durch gemeinsames Vermengen, Vermischen, Kneten, Extrudieren oder Verwalzen. Die Temperatur beim Mischen liegt vorzugsweise in einem Bereich von 220 °C bis 340 °C, besonders bevorzugt von 240 bis 320°C und speziell von 250 bis 300 °C. Dem Fachmann sind die geeigneten Verfahren bekannt.

### Formkörper

Aus den erfindungsgemäß eingesetzten Polyamid-Zusammensetzungen werden durch Spritzgießen Formkörper hergestellt, wobei beim Spritzgießen mindestens zwei Fließfronten der geschmolzenen Polyamid-Zusammensetzung aufeinandertreffen und mindestens eine Bindenaht ausbilden.

Damit weisen die Formkörper mindestens eine Bindenaht auf, die aus dem Spritzgießprozess herrührt. Das Spritzgießen kann nach bekannten Verfahren erfolgen und ist beispielsweise beschrieben in "Einfärben von Kunststoffen", VDI-Verlag, ISBN 3-18-404014-3.

Typischerweise werden beim Spritzgießen mindestens zwei Angusspunkte im Werkzeug vorgesehen, wodurch die mindestens zwei Fließfronten der geschmolzenen Polyamid-Zusammensetzung resultieren. Je nach Größe und Form des Formkörpers können auch deutlich mehr Anspritzpunkte vorgesehen sein. Die mindestens zwei Fließfronten können auch durch Umfließen eines Hohlraums oder Kerns in der Form entstehen.

Die erfindungsgemäß hergestellten Formkörper können ein- oder mehrstückig sein. Bei einem mehrstückigen Aufbau sind die einzelnen Formkörper nachträglich miteinander zu verbinden, beispielsweise durch Verschweißen, wie Reibungsschweißen, Heißgasschweißen oder Laserdurchstrahlschweißen.

Die nach dem erfindungsgemäßen Verfahren erhältlichen Polyamid-Formkörper eignen sich weiter vorteilhaft für eine Verwendung in Automobil-Anwendungen, für Elektro- und Elektronikbauteile, speziell auch im Hochtemperaturbereich.

Eine spezielle Ausführungsform sind Formkörper in Form oder als Teil eines Bauteils für den Automobilbereich, insbesondere ausgewählt unter Zylinderkopfhauben, Motorabdeckungen, Gehäusen für Ladeluftkühler, Ladeluftkühlerklappen, Ansaugrohren, Ansaugkrümmern, Konnektoren, Zahnrädern, Lüfterrädern, Kühlwasserkästen, Gehäusen oder Gehäuseteilen für Wärmetauscher, Kühlmittelkühlern, Ladeluftkühlern, Thermostaten, Wasserpumpen, Heizkörpern, Befestigungsteilen.

Im Autoinnenraum ist eine Verwendung für Armaturentafeln, Lenkstockschalter, Sitzteile, Kopfstützen, Mittelkonsolen, Getriebe-Komponenten und Türmodule, im Autoaußenbereich für A-, B-, C- oder D-Säulenabdeckungen, Spoiler, Türgriffe, Außenspiegelkomponenten, Scheibenwischerkomponenten, Scheibenwischerschutzgehäuse, Ziergitter, Deckleisten, Dachreling, Fensterrahmen, Schiebedachrahmen, Antennenverkleidungen, Vor- und Rückleuchten, Motorabdeckungen, Zylinderkopfhauben, Ansaugrohre, Scheibenwischer sowie Karosserieaußenteile möglich.

Eine weitere spezielle Ausführungsform sind Formkörper als solche oder als Teil eines elektrischen oder elektronischen passiven oder aktiven Bauteils, einer Leiterplatte, eines Teils einer Leiterplatte, eines Gehäusebestandteils, einer Folie, einer Leitung, insbesondere in Form oder als Teil eines Schalters, eines Steckers, einer Buchse, eines Verteilers, eines Relais, eines Widerstandes, eines Kondensators, einer Spule oder eines Spulenkörpers, einer Lampe, einer Diode, einer LED, eines Transistors, eines Konnektors, eines Reglers, eines integrierten Schaltkreises (IC), eines Prozessors, eines Controllers, eines Speichers und/oder eines Sensors.

Für den Küchen- und Haushaltsbereich ist der Einsatz der Polyamide zur Herstellung von Komponenten für Küchengeräte, wie z. B. Fritteusen, Bügeleisen, Knöpfe, sowie Anwendungen im Gartenbereich, z. B. Komponenten für Bewässerungssysteme oder Gartengeräte, möglich.

Die Herstellung der Polyamid-Zusammensetzung zur Herstellung von Formkörpern erfolgt nach an sich bekannten Verfahren. Auf die oben genannten Verfahren zur Herstellung der PolyamidZusammensetzung wird hier Bezug genommen. Dazu zählt das Mischen der Komponenten in den entsprechenden Gewichtsanteilen. Vorzugsweise geschieht das Mischen der Komponenten bei erhöhten Temperaturen durch gemeinsames Vermengen, Vermischen, Kneten, Extrudieren oder Verwalzen. Die Temperatur beim Mischen liegt vorzugsweise in einem Bereich von 220 bis 340 °C, besonders bevorzugt von 240 bis 320 °C und speziell von 250 bis 300 °C. Es kann vorteilhaft sein, einzelne Komponenten vorzumischen. Es ist weiterhin auch möglich, die Formteile aus einer deutlich unterhalb der Schmelztemperatur des Polyamids hergestellten physikalischen Mischung (dryblend) vorgemischter Komponenten und/oder einzelner Komponenten direkt herzustellen. Die Temperatur beim Mischen beträgt dann vorzugsweise 0 bis 100 °C, besonders bevorzugt 10 bis 50 °C, insbesondere Umgebungstemperatur (25 °C). Die Formmassen werden durch Spritzguss zu Formkörpern verarbeitet. Sie eignen sich insbesondere beispielweise für Materialen für Deckel, Gehäuse, Anbauteile, Sensoren beispielsweise für Kfz-, Elektro-, Elektronik-, Telekommunikations-, Informationstechnologie-, Computer-, Haushalts-, Sport-, Medizin- oder Unterhaltungsanwendungen.

Die aus den erfindungsgemäß eingesetzten Polyamid-Zusammensetzungen durch Spritzgießen hergestellten Formkörper zeigen eine deutlich erhöhte Bindenahtfestigkeit nach Wärmealterung über einen weiten Temperaturbereich, insbesondere nach einer Wärmealterung bei 180 °C für 500 Stunden. Die Zugfestigkeit der Formkörper und insbesondere der Bindenaht bleibt bei einer Wärmebehandlung für 500 Stunden bei 180 °C weitgehend erhalten bzw. verringert sich nur geringfügig.

Die Wärmealterung wird dabei analog gängiger Vorgaben aus der Automobilindustrie durchgeführt.

Damit kann durch Einsatz der beschriebenen Polyamid-Formmassen, insbesondere bei Mitverwendung der Copolyamide/Terpolyamide, die Bindenahtfestigkeit nach oxidativer und thermischer Alterung signifikant verbessert werden. Somit können die Nachteile der in WO 2010/014801 und EP-B-2 307 480 beschriebenen Formmassen für relevante Anwendungen behoben werden.

Die Erfindung wird durch die nachfolgenden Beispiele näher erläutert.

### Beispiele

Die folgenden Einsatzstoffe wurden verwendet:

| | | |
|---|---|---|
| A1: | Polyamid-6: Ultramid^{®} B27 der BASF SE, Schmelzpunkt: 222 °C, Viskositätszahl (0,5 % in 96 % H₂SO₄): 150 cm³/g. Die Viskositätszahl des Polyamids wurde in Übereinstimmung mit ISO 307 bei 25 °C bestimmt. | |
| B: | Glasfaser: OCV-995, Hersteller: Nippon Electric Glass (Malaysia) SDN. BHD., mittlerer Durchmesser: 10,5 µm, Länge: 3 mm | |
| C: | Irganox^{®} 1098, Hersteller: BASF SE | |
| D: | mehrwertiger Alkohol: | |
| | Charmor^{®} PP100: | Gemisch von Pentaerythrit (CAS Nr. 116-77-5) und unterschiedlichen Polyalkoholen und Estern. Hersteller: Perstorp |
| | Charmor^{®} DP40^{:} | 2,2,2",2"-Tetrakis(hydroxymethyl)-3,3"-oxydipropan-1-ol. Hersteller: Perstorp |
| | EPVOH: | Ethylenpolyvinylalkohol (CAS-Nr. 26221-27-2) |
| | Cul/KI: | Mischung aus Kupferiodid (CAS-Nr. 7681-65-4) und Kaliumiodid (CAS-Nr.: 7681-11-0) |
| E: | Schmiermittel: | Calciumstearat (CAS-Nr. 1592-23-0). |
| | EBS: | Distearylethylendiamid (CAS-Nr. 110-30-5) |
| | Farbmittel: | Nigrosin (CAS-Nr. 8005-02-5, Solvent black 7) |

Die in der nachstehenden Tabelle 1 angegebenen Inhaltsstoffe wurden bis auf die Glasfasern (separate Dosierung via hot-feed) in einem Taumelmischer für 10 Minuten vorgemischt und dann über einen Zweiwellenextruder mit Durchmesser 25 mm und einem L/D-Verhältnis von 44 bei 300 °C Zylindertemperatur extrudiert und granuliert. Das naturfarbene Polyamidgranulat wurde hierzu vorher in einem Trockenofen bei 100 °C für vier Stunden getrocknet, so dass der Feuchtigkeitsgehalt bei unter 0,1 % lag. Das erhaltene Granulat wurde auf einer Spritzgussmaschine bei 290 °C Massetemperatur zu Standard-ISO-Hundeknochen verspritzt und sowohl visuell als auch messtechnisch beurteilt. Die Herstellung der Standard-ISO-Hundeknochen einer Dicke von 4 mm und einer Länge von 150 mm erfolgte über an den Enden des Hundeknochens einander gegenüberliegende Anspritzpunkte, so dass das einfließende Polyamid von außen in die Mitte des Hundeknochens floss und sich in der Mitte des Formkörpers eine Bindenaht ausbildete. Die Bindenahtfestigkeit wurde durch einen normierten Bruchspannungstest bestimmt. Die mechanischen Eigenschaften wurden gemäß DIN ISO 527 bzw. 179-2/1 eU bzw. 179-2/1 eAf in der 2017 gültigen Fassung bestimmt. Die in der Tabelle angegebenen Mengen sind Gew.-%.

Die Wärmealterung wurde gemäß typischen Automobilnormen durchgeführt. Hierzu wurde ein Umluft-Ofen entsprechend temperiert. Die Proben wurden vor den jeweiligen Schritten getrocknet bei 80 °C für 48 Stunden unter vermindertem Druck. Danach wurden sie im temperierten Ofen für die angegebene Zeit gelagert.

**Tabelle 1**

| | C1 | C2 | E1 | E2 | E3 | E4 | E5 | E6 | E7 | E8 |
|---|---|---|---|---|---|---|---|---|---|---|
| Ultramid^{®} B27 E | 69.86 | 69.12 | 68.86 | 69.00 | 68.86 | 69.00 | 68.00 | 68.00 | 66.40 | 67.62 |
| OCV-995 | 30.00 | 30.00 | 30.00 | 30.00 | 30.00 | 30.00 | 30.00 | 30.00 | 30.00 | 30.00 |
| Charmor^{®} PP100 | | | 1.00 | 1.00 | | | 2.00 | | | |
| Charmor^{®} DP40 | | | | | 1.00 | 1.00 | | 2.00 | | |
| EPVOH | | | | | | | | | 3.00 | 1.50 |
| KI/Cul (4:1) | | 0.28 | | | | | | | | 0.28 |
| EBS | | 0.30 | | | | | | | 0.30 | 0.30 |
| Nigrosin | | 0.30 | | | | | | | 0.30 | 0.30 |
| Irganox^{®} 1098 | 0.14 | | 0.14 | | 0.14 | | | | | |
| Calciumstearat | 0.25 | | 0.25 | 0.25 | 0.25 | 0.25 | 0.18 | 0.18 | | |

| | C1 | C2 | E1 | E2 | E3 | E4 | E5 | E6 | E7 | E8 |
|---|---|---|---|---|---|---|---|---|---|---|
| Bruchspannung, dry as molded, [MPa] | 98 | 98 | 98 | 98 | 98 | 97 | 97 | 96 | 94 | 98 |
| Bruchspannung, nach Lagerung: 180 °C/500 h, [MPa] | 49 | 48 | 51 | 55 | 58 | 59 | 65 | 71 | 64 | 53 |
| Retention [%] | 50 | 49 | 52 | 56 | 59 | 61 | 67 | 74 | 68 | 54 |
| Bruchspannung nach Lagerung: 140 °C/500 h, [MPa] | 54 | | 64 | | 62 | | | | | |
| Retention [%] | 55 | | 65 | | 63 | | | | | |

Die trockenen spritzgegossenen Hundeknochen (dry as molded, DAM) zeigen nur geringfügig unterschiedliche Bruchdehnungen.

Bei einer Wärmealterung bei 180 °C tritt die Wirkung des mehrwertigen Alkohols stark hervor.

Die Ergebnisse für Kombinationen von Polyol und Irganox^{®} 1098 der Beispiele E1 und E3 sind besser als die Ergebnisse des Vergleichsbeispiels C1. Nach einer Alterung bei 180 °C zeigen die Zusammensetzungen der Beispiele E5 und E6 die besten Werte für die Bruchspannung.

## Patentansprüche

1. Verwendung von mehrwertigen Alkoholen mit mehr als zwei Hydroxylgruppen in Polyamid-Zusammensetzungen, die mindestens ein Polyamid enthalten, zur Erhöhung der Bindenahtfestigkeit nach Wärmealterung von durch Spritzgießen aus der PolyamidZusammensetzung hergestellten Formkörpern, wobei beim Spritzgießen mindestens zwei Fließfronten der geschmolzenen Polyamid-Zusammensetzung aufeinandertreffen und mindestens eine Bindenaht ausbilden, **dadurch gekennzeichnet, dass** eine Polyamid-Zusammensetzung eingesetzt wird, enthaltend
a) 30 bis 99,9 Gew.-% mindestens eines Polyamids als Komponente A),
b) 0 bis 60 Gew.-% Glasfasern als Komponente B),
c) 0 bis 2 Gew.-% Wärmestabilisatoren ausgewählt unter Kupferverbindungen, sekundären aromatischen Aminen, sterisch gehinderten Phenolen, Phosphiten, Phosphoniten und Mischungen davon als Komponente C),
d) 0,1 bis 10 Gew.-% mindestens eines mehrwertigen Alkohols mit mehr als zwei Hydroxylgruppen als Komponente D),
e) 0 bis 20 Gew.-% weitere Zusatzstoffe als Komponente E),
wobei sich die Mengenangaben, deren Summe 100 Gew.-% ergibt, auf die gesamte Zusammensetzung beziehen, und
die Polyamid-Zusammensetzung maximal 1,5 Gew.-% an Schlagzähigkeitsmodifikatoren enthält und die Polyamid-Zusammensetzung keine Ethylenionomerharze enthält.

2. Verfahren zur Erhöhung der Bindenahtfestigkeit nach Wärmealterung von aus PolyamidZusammensetzungen durch Spritzgießen hergestellten Formkörpern, bei dem man der Polyamid-Zusammensetzung vor dem Herstellen der Formkörper 0,1 bis 10 Gew.-%, bezogen auf die gesamte Polyamid-Zusammensetzung, mindestens eines mehrwertigen Alkohols mit mehr als zwei Hydroxylgruppen zusetzt, und die so erhaltene PolyamidZusammensetzung zur Herstellung der Formkörper spritzgießt, wobei beim Spritzgießen mindestens zwei Fließfronten der geschmolzenen Polyamid-Zusammensetzung aufeinandertreffen und mindestens eine Bindenaht ausbilden, **dadurch gekennzeichnet, dass** eine Polyamid-Zusammensetzung eingesetzt wird, enthaltend
a) 30 bis 99,9 Gew.-% mindestens eines Polyamids als Komponente A),
b) 0 bis 60 Gew.-% Glasfasern als Komponente B),
c) 0 bis 2 Gew.-% Wärmestabilisatoren ausgewählt unter Kupferverbindungen, sekundären aromatischen Aminen, sterisch gehinderten Phenolen, Phosphiten, Phosphoniten und Mischungen davon als Komponente C),
d) 0,1 bis 10 Gew.-% mindestens eines mehrwertigen Alkohols mit mehr als zwei Hydroxylgruppen als Komponente D),
e) 0 bis 20 Gew.-% weitere Zusatzstoffe als Komponente E),
wobei sich die Mengenangaben, deren Summe 100 Gew.-% ergibt, auf die gesamte Zusammensetzung beziehen, und
die Polyamid-Zusammensetzung maximal 1,5 Gew.-% an Schlagzähigkeitsmodifikatoren enthält und die Polyamid-Zusammensetzung keine Ethylenionomerharze enthält.

3. Verwendung oder Verfahren nach Anspruch 1 oder 2, **dadurch gekennzeichnet, dass** in der Polyamid-Zusammensetzung Komponente D) ausgewählt ist aus: Pentaerythrit, Dipentaerythrit, Tripentaerythrit, Di-Trimethylolpropan, D-Mannit, D-Sorbit und Xylit oder Polyvinylalkoholcopolymeren.

4. Verwendung oder Verfahren nach einem der Ansprüche 1 bis 3, **dadurch gekennzeichnet, dass** in der Polyamid-Zusammensetzung das Polyamid A) aliphatisch ist und ausgewählt ist aus PA 4, PA 5, PA 6, PA 7, PA 8, PA 9, PA 10, PA 11, PA 12, PA 46, PA 66, PA 69, PA 610, PA 612, PA 96, PA 99, PA 910, PA 912, PA 1212.

5. Verwendung oder Verfahren nach Anspruch 4, **dadurch gekennzeichnet, dass** in der Polyamid-Zusammensetzung das aliphatische Polyamid A) ausgewählt ist aus PA 6, PA 66 und Gemischen davon.

6. Verwendung oder Verfahren nach einem der Ansprüche 1 bis 5, **dadurch gekennzeichnet, dass** in der Polyamid-Zusammensetzung ein aliphatisches Copolyamid oder Terpolyamid enthalten ist, aufgebaut aus den Monomeren von zwei oder drei Polyamiden, ausgewählt aus PA 4, PA 5, PA 6, PA 7, PA 8, PA 9, PA 10, PA 11, PA 12, PA 46, PA 66, PA 69, PA 610, PA 612, PA 96, PA 99, PA 910, PA 912, PA 1212.

7. Verwendung oder Verfahren nach Anspruch 6, **dadurch gekennzeichnet, dass** in der Polyamid-Zusammensetzung das aliphatischem Copolyamid ein PA 6/PA 66-Copolymer ist.

8. Verwendung oder Verfahren nach einem der Ansprüche 1 bis 7, **dadurch gekennzeichnet, dass** in der Polyamid-Zusammensetzung als Komponente A) eine Mischung aus aliphatischem Polyamid A1) und aliphatischem Copolyamid oder Terpolyamid A2) eingesetzt wird, wobei das Gewichtsverhältnis von A1) zu A2) 55:45 bis 95:5 beträgt.

9. Verwendung oder Verfahren nach Anspruch 8, **dadurch gekennzeichnet, dass** der Kristallisationspunkt der Mischung aus dem mindestens einen Polyamid und dem mindestens einen Copolyamid oder Terpolyamid in der Polyamid-Zusammensetzung unter den Kristallisationspunkten des mindestens einen Polyamids und mindestens einen Copolyamids oder Terpolyamids liegt.

10. Verwendung oder Verfahren nach einem der Ansprüche 1 bis 9, **dadurch gekennzeichnet, dass** in der Polyamid-Zusammensetzung 0,05 bis 2 Gew.-% der Komponente C) vorliegen.

11. Verwendung oder Verfahren nach einem der Ansprüche 1 bis 10, **dadurch gekennzeichnet, dass** in der Polyamid-Zusammensetzung Komponente C) ausgewählt ist aus Kupferverbindungen, sterisch gehinderten Phenolen und Gemischen davon.

12. Verwendung oder Verfahren nach einem der Ansprüche 1 bis 11, **dadurch gekennzeichnet, dass** in der Polyamid-Zusammensetzung 5 bis 60 Gew.-% der Komponente B) vorliegen.

13. Verwendung oder Verfahren nach einem der Ansprüche 1 bis 12, **dadurch gekennzeichnet, dass** der mehrwertige Alkohol kein Glyzerin ist.

## Claims

1. The use of polyhydric alcohols having more than two hydroxyl groups in polyamide compositions comprising at least one polyamide for increasing the weld seam strength after thermal aging of molded articles produced from the polyamide composition by injection molding, wherein during injection molding at least two flow fronts of the molten polyamide composition impact one another and form at least one weld seam, wherein
the polyamide composition employed comprises
a) 30 to 99.9 wt% of at least one polyamide as component A),
b) 0 to 60 wt% of glass fibers as component B),
c) 0 to 2 wt% of heat stabilizers selected from copper compounds, secondary aromatic amines, sterically hindered phenols, phosphites, phosphonites and mixtures thereof as component C),
d) 0.1 to 10 wt% of at least one polyhydric alcohol having more than two hydroxyl groups as component D),
e) 0 to 20 wt% of further additives as component E), wherein the reported amounts, which sum to 100 wt%, are based on the entire composition and
the polyamide composition comprises not more than 1.5 wt% of impact modifiers and the polyamide composition comprises no ethylene ionomer resins.

2. A process for increasing weld seam strength after thermal aging of molded articles produced from polyamide compositions by injection molding, wherein prior to production of the molded articles the polyamide composition is admixed with 0.1 to 10 wt%, based on the total polyamide composition, of at least one polyhydric alcohol having more than two hydroxyl groups, and the resulting polyamide composition is injection molded to produce the molded articles, wherein during injection molding at least two flow fronts of the molten polyamide composition impact one another and form at least one weld seam, wherein the polyamide composition employed comprises
a) 30 to 99.9 wt% of at least one polyamide as component A),
b) 0 to 60 wt% of glass fibers as component B),
c) 0 to 2 wt% of heat stabilizers selected from copper compounds, secondary aromatic amines, sterically hindered phenols, phosphites, phosphonites and mixtures thereof as component C),
d) 0.1 to 10 wt% of at least one polyhydric alcohol having more than two hydroxyl groups as component D),
e) 0 to 20 wt% of further additives as component E),
wherein the reported amounts, which sum to 100 wt%, are based on the entire composition and
the polyamide composition comprises not more than 1.5 wt% of impact modifiers and the polyamide composition comprises no ethylene ionomer resins.

3. The use or the process according to claim 1 or 2, wherein in the polyamide composition component D) is selected from: pentaerythritol, dipentaerythritol, tripentaerythritol, ditrimethylolpropane, D-mannitol, D-sorbitol and xylitol or polyvinylalcohol copolymers.

4. The use or the process according to any of claims 1 to 3, wherein in the polyamide composition the polyamide A) is aliphatic and is selected from PA 4, PA 5, PA 6, PA 7, PA 8, PA 9, PA 10, PA 11, PA 12, PA 46, PA 66, PA 69, PA 610, PA 612, PA 96, PA 99, PA 910, PA 912, PA 1212.

5. The use or the process according to claim 4, wherein in the polyamide composition the aliphatic polyamide A) is selected from PA 6, PA 66 and mixtures thereof.

6. The use or the process according to any of claims 1 to 5, wherein the polyamide composition comprises an aliphatic copolyamide or terpolyamide constructed from the monomers of two or three polyamides selected from PA 4, PA 5, PA 6, PA 7, PA 8, PA 9, PA 10, PA 11, PA 12, PA 46, PA 66, PA 69, PA 610, PA 612, PA 96, PA 99, PA 910, PA 912, PA 1212.

7. The use or the process according to claim 6, wherein in the polyamide composition the aliphatic copolyamide is a PA 6/PA 66 copolymer.

8. The use or the process according to any of claims 1 to 7, wherein the polyamide composition employs as component A) a mixture of aliphatic polyamide A1) and aliphatic copolyamide or terpolyamide A2), wherein the weight ratio of A1) to A2) is 55:45 to 95:5.

9. The use or the process according to claim 8, wherein the crystallization point of the mixture of the at least one polyamide and the at least one copolyamide or terpolyamide in the polyamide composition is below the crystallization points of the at least one polyamide and at least one copolyamide or terpolyamide.

10. The use or the process according to any of claims 1 to 9, wherein the polyamide composition comprises 0.05 to 2 wt% of component C).

11. The use or the process according to any of claims 1 to 10, wherein in the polyamide composition component C) is selected from copper compounds, sterically hindered phenols and mixtures thereof.

12. The use or the process according to any of claims 1 to 11, wherein the polyamide composition comprises 5 to 60 wt% of component B).

13. The use or the process according to any of claims 1 to 12, wherein the polyhydric alcohol is not glycerol.

## Revendications

1. Utilisation d'alcools polyvalents comprenant plus de deux groupes hydroxyle dans des compositions de polyamide, qui contiennent au moins un polyamide, pour augmenter la résistance de joints de soudure après le vieillissement thermique de corps façonnés fabriqués par moulage par injection à partir de la composition de polyamide, au moins deux fronts de coulée de la composition fondue de polyamide se rencontrant lors du moulage par injection et formant au moins un joint de soudure, **caractérisée en ce que**
une composition de polyamide est utilisée, contenant
a) 30 à 99,9% en poids d'au moins un polyamide en tant que composant A),
e) 0 à 60% en poids de fibres de verre en tant que composant B),
c) 0 à 2% en poids de stabilisants thermiques, choisis parmi les composés à base de cuivre, les amines aromatiques secondaires, les phénols stériquement encombrés, les phosphites, les phosphonites et leurs mélanges en tant que composant C),
d) 0,1 à 10% en poids d'au moins un alcool polyvalent comprenant plus de deux groupes hydroxyle en tant que composant D),
e) 0 à 20% en poids d'autres additifs en tant que composant E),
les indications de quantité, dont la somme vaut 100% en poids, se rapportant à la totalité de la composition et la composition de polyamide contenant au maximum 1,5% en poids de modifiants choc et la composition de polyamide ne contenant pas de résine ionomère d'éthylène.

2. Procédé pour augmenter la résistance de joints de soudure après vieillissement thermique de corps façonnés fabriqués à partir de compositions de polyamide par moulage par injection, dans lequel on ajoute à la composition de polyamide, avant la fabrication du corps façonné, 0,1 à 10% en poids, par rapport à la totalité de la composition de polyamide, d'au moins un alcool polyvalent comprenant plus de deux groupes hydroxyle et on moule par injection la composition de polyamide ainsi obtenue pour la fabrication du corps moulé, au moins deux fronts de coulée de la composition fondue de polyamide se rencontrant lors du moulage par injection et formant au moins un joint de soudure, **caractérisé en ce qu'**on utilise une composition de polyamide, contenant
a) 30 à 99,9% en poids d'au moins un polyamide en tant que composant A),
e) 0 à 60% en poids de fibres de verre en tant que composant B),
c) 0 à 2% en poids de stabilisants thermiques, choisis parmi les composés à base de cuivre, les amines aromatiques secondaires, les phénols stériquement encombrés, les phosphites, les phosphonites et leurs mélanges en tant que composant C),
d) 0,1 à 10% en poids d'au moins un alcool polyvalent comprenant plus de deux groupes hydroxyle en tant que composant D),
e) 0 à 20% en poids d'autres additifs en tant que composant E),
les indications de quantité, dont la somme vaut 100% en poids, se rapportant à la totalité de la composition et la composition de polyamide contenant au maximum 1,5% en poids de modifiants choc et la composition de polyamide ne contenant pas de résine ionomère d'éthylène.

3. Utilisation ou procédé selon la revendication 1 ou 2, caractérisé (e) en ce que, dans la composition de polyamide, le composant D) est choisi parmi : le pentaérythritol, le dipentaérythritol, le tripentaérythritol, le di-triméthylolpropane, le D-mannitol, le D-sorbitol et le xylitol ou les copolymères de poly(alcool vinylique).

4. Utilisation ou procédé selon l'une des revendications 1 à 3, caractérisé(e) en ce que, dans la composition de polyamide, le polyamide A) est aliphatique et est choisi parmi le PA 4, le PA 5, le PA 6, le PA 7, le PA 8, le PA 9, le PA 10, le PA 11, le PA 12, le PA 46, le PA 66, le PA 69, le PA 610, le PA 612, le PA 96, le PA 99, le PA 910, le PA 912, le PA 1212.

5. Utilisation ou procédé selon la revendication 4, caractérisé(e) en ce que, dans la composition de polyamide, le polyamide aliphatique A) est choisi parmi le PA 6, le PA 66 et leurs mélanges.

6. Utilisation ou procédé selon l'une des revendications 1 à 5, caractérisé(e) en ce que, dans la composition de polyamide, un copolyamide ou un terpolyamide aliphatique est contenu, constitué par les monomères de deux ou trois polyamides, choisis parmi le PA 4, le PA 5, le PA 6, le PA 7, le PA 8, le PA 9, le PA 10, le PA 11, le PA 12, le PA 46, le PA 66, le PA 69, le PA 610, le PA 612, le PA 96, le PA 99, le PA 910, le PA 912, le PA 1212.

7. Utilisation ou procédé selon la revendication 6, caractérisé(e) en ce que, dans la composition de polyamide, le copolyamide aliphatique est un copolymère de PA 6/PA 66.

8. Utilisation ou procédé selon l'une des revendications 1 à 7, caractérisé(e) en ce que, dans la composition de polyamide, on utilise comme composant A) un mélange de polyamide aliphatique A1) et de copolyamide ou terpolyamide aliphatique A2), le rapport pondéral de A1) à A2) valant 55:45 à 95:5.

9. Utilisation ou procédé selon la revendication 8, caractérisé(e) en ce que le point de cristallisation du mélange constitué par ledit au moins un polyamide et ledit au moins un copolyamide ou terpolyamide dans la composition de polyamide se situe sous les points de cristallisation dudit au moins un polyamide et dudit au moins un copolyamide ou terpolyamide.

10. Utilisation ou procédé selon l'une des revendications 1 à 9, caractérisé(e) en ce que 0,05 à 2% en poids de composant C) sont présents dans la composition de polyamide.

11. Utilisation ou procédé selon l'une des revendications 1 à 10, caractérisé(e) en ce que, dans la composition de polyamide, le composant C) est choisi parmi les composés à base de cuivre, les phénols stériquement encombrés et leurs mélanges.

12. Utilisation ou procédé selon l'une des revendications 1 à 11, caractérisé(e) en ce que 5 à 60% en poids du composant B) sont présents dans la composition de polyamide.

13. Utilisation ou procédé selon l'une des revendications 1 à 12, caractérisé(e) en ce que l'alcool polyvalent n'est pas le glycérol.
